(19) Europäisches Patentamt
European Patent Office
Office européen des brevets

(11) EP 2 317 070 A1

(12) EUROPEAN PATENT APPLICATION

(43) Date of publication:
04.05.2011 Bulletin 2011/18

(51) Int Cl.:
E21B 47/022 (2006.01)          E21B 47/09 (2006.01)
E21B 47/10 (2006.01)          G01V 11/00 (2006.01)
G01N 27/22 (2006.01)

(21) Application number: 09174669.3

(22) Date of filing: 30.10.2009

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA RS

(71) Applicant: Welltec A/S
3450 Allerød (DK)

(72) Inventors:
• Hallundbaek, Jørgen
3230, Græsted (DK)

• Kjaersgaard-Rasmussen, Jimmy
3460, Birkerød (DK)
• Robenhagen, Ulrik Weiland
2000, Frederiksberg (DK)
• Francke, Mathias
2830, Virum (DK)

(74) Representative: Hoffmann Dragsted A/S
Rådhuspladsen 16
1550 Copenhagen V (DK)

(54) **Downhole system**

(57) The invention relates to a downhole system for performing an operation in an exact position in a well, comprising a positioning tool (2) for determining the position in a casing (3) downhole and an operation tool. The operation tool may be a logging tool (201) or a scanning tool (301). Moreover, the downhole system may be a ranging system (408,414) for controlling a drilling process downhole.

Fig. 10

EP 2 317 070 A1

**Description**

Technical field

The present invention relates to a downhole system for performing an operation in an exact position in a well, comprising a positioning tool for determining the position in a casing downhole. The invention further relates to a downhole system for controlling a drilling process downhole.

Background

When inspecting a casing downhole, it may be desirable to know the specific position of an observation made during the inspection in order to perform a subsequent operation, e.g. seal a leak or clean a sleeve or a valve. For this and several other reasons, many attempts have been made to develop a device capable of determining the position of the observation tool when situated downhole.

A known device for determining the position of a tool downhole is called a "Casing collar locator". Typically, a locator comprises a magnet and a coil to measure differences in the electrical flux when passing a collar where two casing parts are mounted together. The device is thus only able to determine the position of the tool collar by collar and not between two collars, and in order to measure differences in the flux, the device must be moved with very high speed in the casing.

Another "Casing collar locator" comprises one or more flux gate magnetometers in the form of coils for measuring the remaining or naturally occurring magnetism in the casing collars. However, in order to determine the position of the tool between the collars, the wireline depth must be used.

As shown in US 6,768,299, a "Casing collar locator" may also comprise one magnetometer for measuring changes in the strength of the magnetic field generated from a magnet. The "Casing collar locator" may also comprise more than one magnetometer to achieve different modes of detection so that one magnetometer detects collars, and the other magnetometers detect the direction of the tool in order to control the direction of the drilling head of the tool.

Description of the invention

It is an object of the present invention to wholly or partly overcome the above disadvantages and drawbacks of the prior art. More specifically, it is an object to provide an improved downhole system capable of performing an operation in a more exact position of the tool, making it possible to optimise the operation in terms of performance, choice of material, and/or success rate.

The above objects, together with numerous other objects, advantages, and features, which will become evident from the below description, are accomplished by a solution in accordance with the present invention by a downhole system for performing an operation in an exact position in a well, comprising:

- a positioning tool for determining the position in a casing downhole, the positioning tool having a longitudinal axis and comprising:
- a detecting unit comprising:
- at least one magnet for generating a magnetic field,
- a first sensor arranged in a first plane and at a first distance from the magnet for detecting changes in the magnetic field, the sensor being, and
- a second sensor arranged in the same first plane and at a second distance from the first sensor along the axis also for detecting changes in the magnetic field, and
- an operation tool,

wherein the sensors detect changes in the direction of the magnetic field.

When the downhole system both has a positioning tool and an operation tool, the system is capable of performing the operation in an extact position. The position is determined by the positioning tool and when the positioning tool both has a magnet and two sensors, the positioning of the tool is independent of the velocity of the tool. The measurements conducted by the sensors can be processed into a fairly accurate estimate of the velocity of the tool and thereby a fairly accurate estimate of the position. Therefore, no additional tool is necessary to determine the position, and the position can be determined within two casing collars as well.

When the tool has two sensors positioned at a distance from each other, the measurements of the first sensor can be compared with the measurements of the second sensor, which leads to a more precise estimate of the present position of the tool, and the following operation depending on the position can thereby be performed more accurate.

The operation tool may be of tools able to operate in a well. Since the positioning tool is able to determine an exact position in the well, the operation tool can operate more precisely. When e.g. inspecting the well to detect leaks, the downhole system is able to detect the exact position of a leak by using the positioning tool. The subsequent operation of sealing the leak, performed by a tool able to insert a patch, can thus be performed more accurately and the patch used can be shorter as the position has been determined more accurately.

When inspecting the well in order to determine whether a sleeve is open, partly open, or closed, the operation tool used to inspect the sleeve is able to locate the sleeve in question faster, as its expected position can be located by the positioning tool. The expected position of different elements in the well, such as a sleeve, a valve, etc., is known from the completion diagram, and a positioning tool capable of determining the expected position of the diagram makes it possible to locate the sleeve quicker. Moreover, when knowing the exact position during the inspection, the exact position of the moving part for opening and closing the sleeve can be determined.

In one embodiment, the sensors may be positioned at the same distance from the magnet.

These sensors may be anisotropic magnetoresistive sensors. By using an anisotropic magnetoresistive sensor, the measurements of the sensors may be independent of the velocity of the tool.

The first and the second sensor may be arranged in the same first plane as the magnet. By arranging the sensors in the same plane, a more precise position of the tool may be obtained.

Furthermore, the first and the second sensor may be arranged on one side of the magnet, and a plurality of sensors may be arranged on the other side in the first plane.

The magnet may be arranged on one side of a plate, and an additional magnet may be arranged on another side of the plate so that two repelling poles of the magnets are facing one another. The plate may be made of a non-conductive or non-magnetic material, such as porcelain, ceramic, mica, glass, plastics, or a combination thereof.

The tool may comprise a plurality of magnets, each of which is arranged outside a sensor so that the first magnet is arranged outside the first sensor, and the second magnet is arranged outside the second sensor.

Furthermore, the at least one magnet may be a permanent magnet or an electromagnet.

Each sensor may measure a direction of the magnetic field in that sensor.

The tool may have a cylindrical shape with a wall, and the detecting unit may be arranged inside the tool and surrounded by the wall.

The magnet may have a rectangular shape or a cylindrical shape.

The distance between two sensors may be between 5 and 150 mm, preferably between 5 and 100 mm, more preferably between 10 and 50 mm, and even more preferably between 10 and 30 mm.

Furthermore, the positioning tool may comprise a second detecting unit according to the above.

In addition, the distance between the detecting units in the tool may be between 100 mm and 10000 mm, preferably between 1000 mm and 5000 mm.

In one embodiment, the downhole system may also comprise a calculation unit for calculation of the velocity and/or the position of the positioning tool.

The operation tool may be a logging tool for determining properties of a fluid surrounding the tool arranged downhole in a casing comprising a wall and having a longitudinal extension, the logging tool having a substantially longitudinal cylindrical shape with a longitudinal axis and, when seen in cross-section, a periphery and comprising:

- a plurality of electrodes arranged spaced around the longitudinal axis in the periphery of the tool so that the fluid flows between the electrodes and the casing wall, and
- a means for measuring the capacitance between two electrodes in all combinations giving $n^*(n-1)/2$ capacitance measurements for n electrodes.

Having a logging tool measuring the capacitance between two electrodes in all possible combinations giving $n^*(n-1)/2$ capacitance measurements for n electrodes makes it possible to obtain a sufficient number of measurements for creating a tomogram or a cross-sectional image of the flow. Thus, the logging tool can be used to inspect the well in order to locate any leaks. As the exact position of the leak has already been determined by the positioning tool, the subsequent process of sealing the leak can be performed at the right position without having to use an unnecessarily long patch. When using an unnecessarily long patch, the risk of having to place a patch inside another patch is increased, and thus also the risk of decreasing the flow unnecessarily.

The logging tool may have a space between every two electrodes, which space may be substantially filled up with a non-conductive means. The non-conductive means may be made of a substantially non-conductive material and/or a non-conductive gas.

The downhole system may further comprise a positioning device for determining a position of the logging tool along the longitudinal extension of the casing. The positioning device may be a driving unit, such as a downhole tractor or a winch.

In one embodiment of the logging tool, the electrodes may be arranged in a front end of the tool at a distance from a tip of the tool of less than 25% of a total length of the tool, preferably less than 20%, and more preferably less than 15%.

Moreover, the means for measuring may provide a continuous measurement of the capacitance between the electrodes and it may measure a capacitance between two electrodes at a rate of at least 1 measurement of the capacitance per second, preferably at least 5 measurements per second, and more preferably at least 10 measurements per second. The measurement of the capacitance between two electrodes may be performed at a potential (V) over two electrodes and with a frequency of at least 1 MHz.

The electrodes may be positioned between a tip of the logging tool and the positioning device.

In addition, the downhole system may further comprise a calculation unit for processing capacitance measurements measured by the electrodes of the logging tool.

In another embodiment of the downhole system according to the invention, the operation tool may be a scanning tool for scanning an object downhole, the tool having a longitudinal axis and comprising:

- an emitting device for emitting radiation,
- a lens for transmitting the radiation in a predetermined pattern of radiation, and
- a receiving device,

wherein, in a first position of the tool, the pattern of radiation is reflected on the object to be scanned and the reflected radiation is received in the receiving device resulting in a first measurement.

Having a scanning tool as the operation tool makes it possible to scan the inside surface of the well line by line or in another pattern. When subsequently combining the sequence of images, an image can be created showing the object or part of the object in a way which makes it possible for an operator to evaluate the object by a visual inspection of the scanned image and thus determine what to do in order to fix a specific problem. The entire well may be scanned in this way in order to evaluate the condition of the well and to determine which parts of the well needs repair work.

When inspecting the well using the scanning tool, a leak may be detected. When the exact position of the leak can moreover be detected using the positioning tool, the leak can easily be found and sealed off in a second run.

A second measurement may be conducted in a second position of the scanning tool.

Moreover, the downhole system may further comprise a driving unit for moving at least the lens and the receiving device along the longitudinal axis and conducting a second measurement at a distance from the first measurement and in this way scan the object by emitting the pattern at a distance from the previous emitted pattern, and by repetition thus providing a sequence of measurements.

In another embodiment, the pattern may be a line.

The driving unit may be a downhole tractor or a conveying unit arranged inside the scanning tool, and it may move at least the lens and the receiving device at least 0,1 mm between the first and the second measurements.

In one embodiment, the lens may be a piano-convex cylinder lens. In another embodiment, the lens may be torus-shaped.

The receiving device may be a recording device and it may be arranged along the longitudinal axis of the scanning tool.

The emitting device may emit the radiation in a direction transverse to the longitudinal axis. In one embodiment, the scanning tool may comprise a plurality of emitting devices.

The downhole system may further comprise a mirror device in connection with the scanning tool for reflecting the pattern reflected by the object before it is received in the receiving device. The mirror may be conical.

In one embodiment, the lens and the emitting device may be comprised in a line generator.

Moreover, measurements may be conducted at a rate of 10 to 200 measurements per second, preferably at a rate of 20 to 100 measurements per second, and more preferably at a rate of 20 to 50 measurements per second.

The downhole system may also be a ranging system for controlling a drilling process downhole, the ranging system having a longitudinal direction and comprising:

- a drilling tool for drilling a first borehole, the drilling tool having a tool axis and comprising a magnetic field source generating a magnetic field and having a magnetic field source axis, and
- a sensing tool arranged in a second borehole for measuring the magnetic field by means of a sensor unit and comprising the positioning tool,

wherein the magnetic field source axis is substantially parallel to the tool axis.

When the downhole system is a ranging system, the positioning tool may be comprised in the sensing tool, in which case the magnet may be arranged in the drilling tool making it possible to use the magnetic field source for both the positioning and the sensing tool. However, the positioning tool may also comprise a magnet itself, in which case the operation tool is either the drilling tool or the sensing tool.

When the ranging system comprises a positioning tool, an exact position of the whole operation can be determined. The sensing tool is able to determine the position and direction of the drilling head in relation to the sensing tool, and the positioning tool is able to determine the position of the sensing tool in the well of the second borehole. In this way, the drilling operation can be performed more precisely.

In one embodiment of the ranging system, the magnetic field source axis may be substantially coincident with the tool axis.

The magnetic field source may be an electromagnet or a permanent magnet.

In addition, the sensor unit may comprise at least two magnetometers, and the magnetometers may measure the strength of the magnetic field.

The second borehole may be an existing borehole.

In one embodiment of the ranging system, the sensor unit and/or the drilling tool may be driven by a driving unit.

Moreover, the system may comprise a positioning tool for determining the position of the sensing tool in the second borehole or the position of the drilling tool in the first borehole.

The sensing tool may have means for controlling the velocity or position of the sensing tool.

The magnetic field source may have a through hole, allowing fluid for driving a drilling head of the drilling tool to pass through the magnetic field source.

In another embodiment, the ranging system may comprise a calculation unit for processing strength measurements of the magnetic field measured by the sensing tool.

In yet another embodiment, the ranging system may comprise a second drilling tool, the sensing tool being arranged in or in connection with the second drilling tool so that the first drilling tool comprises the magnetic field source and the second drilling tool comprises the sensing tool.

Brief description of the drawings

The invention and its many advantages will be described in more detail below with reference to the accompanying schematic drawings, which for the purpose of illustration show some non-limiting embodiments and in which

Fig. 1 shows a cross-sectional view of the positioning tool according to the invention,

Fig. 2 shows another embodiment of the tool,

Fig. 3 shows yet another embodiment of the tool,

Fig. 4 shows yet another embodiment of the tool,

Fig. 5 shows a cross-sectional view of a magnet,

Fig. 6 shows a cross-sectional view of the tip of an embodiment of the tool,

Fig. 7 shows a positioning tool in connection with a driving unit,

Fig. 8 shows a graph of measurements past two casing collars,

Fig. 9 shows a graph of measurements in two sensors,

Fig. 10 shows a cross-sectional view of the logging tool transverse to the longitudinal extension of the tool,

Fig. 11 shows a logging tool according to the invention in a well,

Fig. 12 shows a partly cross-sectional view of the logging tool along the longitudinal extension of the tool,

Fig. 13 shows another embodiment of the logging tool according to the invention in a well,

Fig. 14 shows an image illustrating a casing filled with gas,

Fig. 15 shows an image illustrating water flowing into the casing from a leak in the casing,

Fig. 16 shows an image illustrating how the water has moved to the bottom of the casing at a distance from the leak of Fig. 15,

Fig. 17 shows an image illustrating a casing filed with water,

Fig. 18 shows a logging tool according to the invention in a well winding through the subsoil or substratum,

Fig. 19 and 20 show images or tomograms illustrating a casing filled with gas and a water bobble,

Fig. 21 shows a flow chart of the method for determining a permittivity profile of a cross-sectional view of a fluid in the annulus surrounding the tool,

Fig. 22 shows a partly cross-sectional view of a scanning tool according to the invention seen from a side,

Fig. 23 shows a partly cross-sectional view of another embodiment of the scanning tool according to the invention seen from a side,

Fig. 24 shows a partly cross-sectional view of another embodiment of the scanning tool seen from one end,

Fig. 25 shows a graph of measurements, based on the image of Fig. 29, in Cartesian coordinates,

Fig. 26 shows a second graph of the measurements of Fig. 25 in polar coordinates,

Fig. 27 shows a grid,

Fig. 28 shows a line,

Fig. 29 shows the recorded image that, after transformation, resulted in the measurements shown in Figs. 25 and 26,

Fig. 29A shows a sequence of recorded images of a sleeve combined to create an image of the sleeve, and

Fig. 30 shows a partly cross-sectional view of yet another embodiment of the tool,

Fig. 31 shows a cross-sectional view of a ranging system according to the invention arranged in two boreholes downhole,

Fig. 32 shows a partly cross-sectional view of the drilling tool,

Fig. 33 shows the magnetic field source in perspective.

All these figures are highly schematic and not necessarily to scale, and they show only those parts which are necessary in order to elucidate the invention, other parts being omitted or merely suggested.

Detailed description of the invention

The present invention relates to a downhole system 100 comprising a positioning tool 1 and an operation tool.

The positioning tool 1 is used for determining the position of a tool downhole before performing an operation downhole or for locating the position of a valve, an annular barrier, a sleeve, a patch, a leak in the casing, or any other feature resulting in a significant change in a magnetic field.

The positioning tool 1 may also be used for detecting a leak or a valve due to the fact that both a valve and a leak result in significant change in the magnetic field and at the same time estimate the position of the leak or the valve. If the feature to be located downhole does not result in a significant change in the magnetic field, or if further information of the condition of e.g. the valve is needed, the positioning tool 1 can be used in connection with an inspection tool or another logging tool. If the feature to be located does result in a significant change, the positioning tool 1 can also be used in connection with a drilling tool, a setting tool for setting a plug, a tool for inserting a liner or a patch, or a similar type of downhole tool. The downhole tools may also be connected with the positioning tool 1 if these tools need a position downhole for performing the specific operation in the well, such as drilling of a sidetrack.

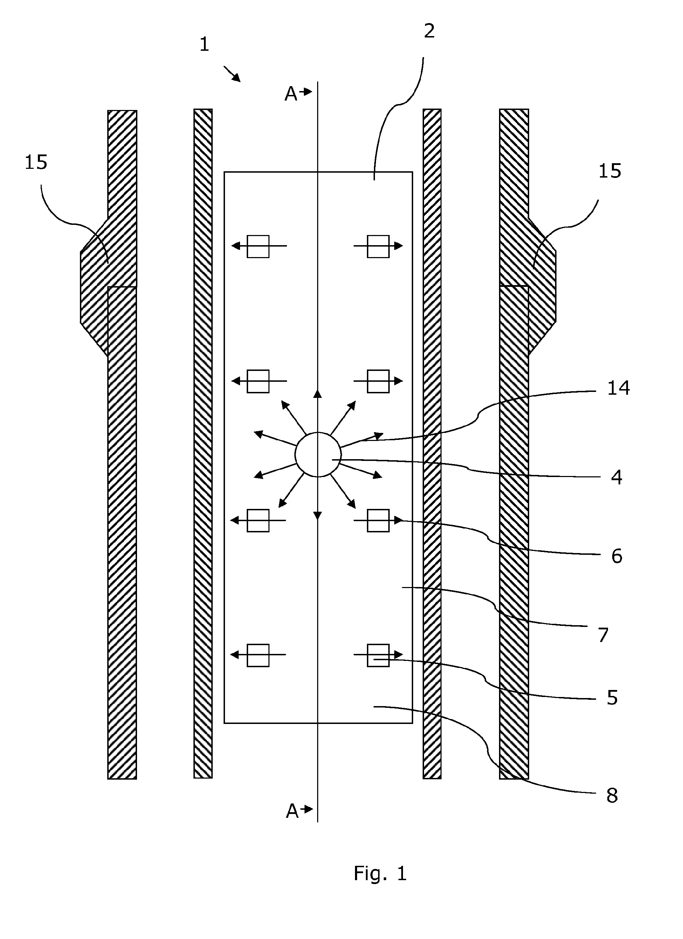

A positioning tool 1 comprises a detection unit 2 as shown in Fig. 1. The detection unit 2 comprises a magnet 4 and eight sensors 5, 6. These sensors 5, 6 are positioned so that four sensors are positioned on one side of the magnet 4 and four sensors are positioned on the other side of the magnet. The sensors 5, 6 are arranged with an axial distance $d_2$ from each other and in the same plane 7 as they are positioned on a plate 8. The sensors 5, 6 are arranged at a first

distance $d_1$ to the magnet 4 which is positioned on the same plate 8. In Fig. 1, the plate 8 is a circuit board.

The positioning tool 1 has a substantially cylindrical shape, and the detecting unit 2 is arranged in its centre, extending along the length the tool. The plate 8 is fastened to the wall of the tool 1. When the tool 1 moves down the casing 3, the magnetic field changes depending on the surroundings, and the sensors 5, 6 detect the direction θof the magnetic field lines during the movement of the tool. By performing substantially continuous measurements of the direction, small variations are measured while the tool 1 passes the part of the casing 3 between two collars or joints. The small variations may be caused by the fact that the casing 3 is slightly inaccurate in thickness throughout its entire length or that the casing may have a varying density.

Each sensor 5, 6 measures the same changes, but there is a difference in time between the measurements due to the distance between the sensors. The data from the sensors 5, 6 is convoluted, and from the maximum value of the convolution, it can be deducted when a first sensor 5 passes the same position as a second sensor 6, and so forth. The period between the time where the first and the second sensor pass the same positions is named ΔT, and since the distance $d_2$ between the first 5 and the second sensor 6 is known, it is possible to calculate the velocity of the positioning tool 1 by means of the following equation:

$$v_{estimate} = \frac{d_2}{\Delta T}$$

The estimate of the velocity is based on a number of measurements, and by continuously calculating the velocity of the tool 1, it is possible to calculate the distance Δx travelled since the previous calculation by means of the following equation:

$$\Delta x = v \cdot \Delta t$$

where Δt is the time between calculations, and Axis the estimated velocity. When adding these estimated distances, the distance from the top of the well at a specific time of e.g. an observation of an irregularity, such as a leak, is known.

Using convolution between datasets received from at least two sensors instead of only comparing the measurements from one sensor with measurements from the other measurement by measurement, the method is relatively insensitive to noise in the measurements. In this way, a more accurate result is obtained. Furthermore, since the same characteristics are present in the two sets, the scale of the data is not important.

When the positioning tool 1 passes a joint or a collar where two casing parts are mounted together, the change in field direction is substantially increased. At this point, the distance from a collar is zero, and any errors in the estimated position of the tool can be eliminated. The number of past collars and the distance from the last collar indicate the actual position of the tool since the distance between collars is known.

If a change in field direction between two collars is substantially increased, this must be caused by another feature, and based on the knowledge of the completion or the extent of the feature, the type of feature, such as a valve, a patch, a leak, etc., can be determined.

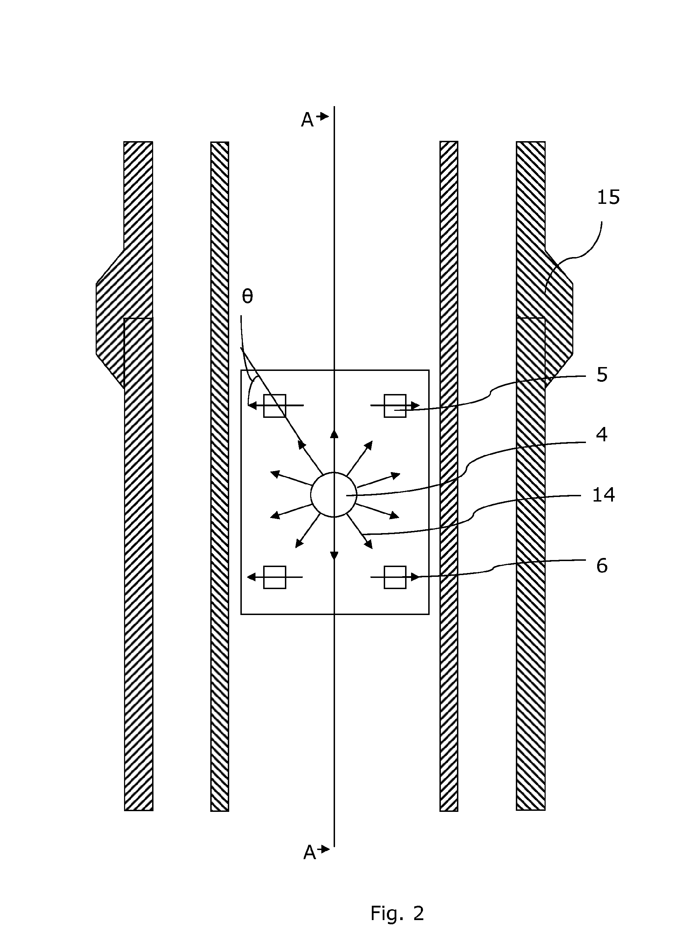

The detecting unit 2 of Fig. 2 only has four sensors 5, 6, and only two of the sensors arranged on the same side of the magnet 4 are necessary to calculate the position of the tool. The closer the two sensors 5, 6 are arranged in the longitudinal direction of the tool, the faster the measurements can be processed.

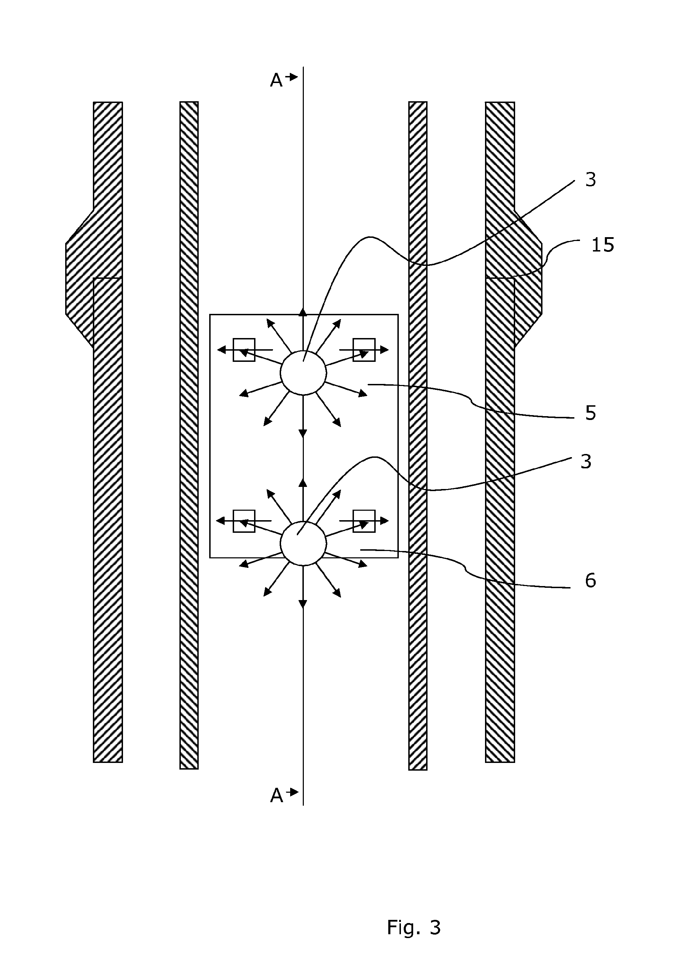

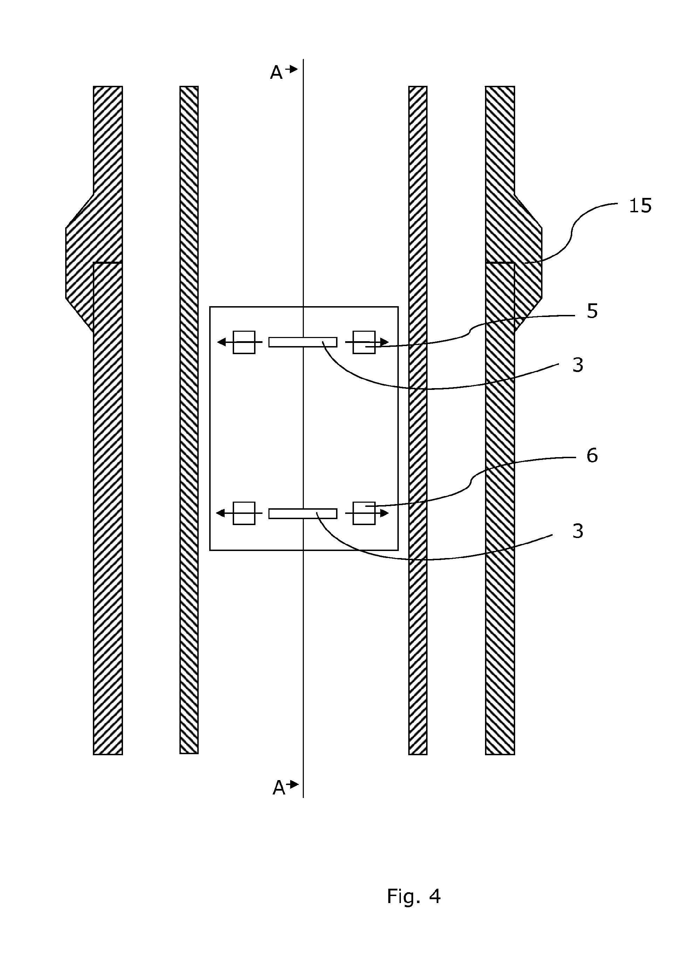

As it appears from Figs. 3 and 4, one magnet 4 can be arranged outside a sensor 5, 6 so that the first magnet is arranged outside the first sensor, and the second magnet is arranged outside the second sensor. When there is a magnet 4 outside each sensor 5, 6, all sensors are positioned with the same distance to the magnet, and this results in a more precise measurement, which results in a better velocity estimates.

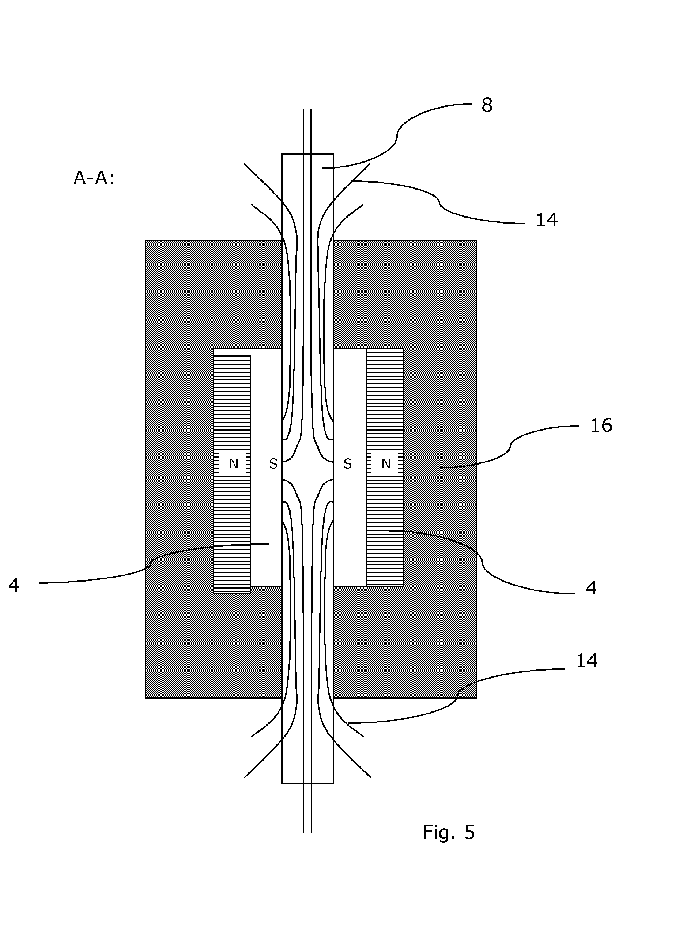

The magnet/magnets 4 can be positioned on a plate 8, such as a circuit board. As it appears in the cross-sectional view of Fig. 5, a magnet 4 may be arranged on the other side of the plate 8 to direct the magnetic field lines along the extension of the plate and thereby in the direction of the sensors 5, 6. In Figs. 1, 2, 3, and 5, the magnet 4 has a cylindrical shape and, as it appears in Fig. 5, repelling poles, such as the south poles of the two opposing magnets, face one another. However, it could also be the north poles.

The magnet 4 is surrounded by a housing 16 of non-magnetic material in order to hold them in place. The non-magnetic material may be any type of substantially non-magnetic material, such as aluminum, porcelain, ceramic, mica, glass, plastics, or a combination thereof.

The plate 8 may be any type of plane substance and it may be made of any suitable non-magnetic material, such as aluminum, porcelain, ceramic, mica, glass, plastics, or a combination thereof.

In Fig. 4, magnets 4 are only arranged on one side of the plate 8. Each magnet 4 has a pole facing one sensor 5, 6, and the repelling poles face the other sensor. In this way, the field lines extend into the sensor 5, 6 without a second magnet 4 on the other side of the plate 8 being needed to direct the lines.

The distance between the sensors 5, 6 does not have to be the same, and the distance between the first two sensors in a row of four may therefore be different than the distance between the second and third or the third and fourth sensors.

The distance $d_1$ from a sensor to the magnet is the distance from the longitudinal axis of the detecting unit on which the centre of the magnet is arranged as shown in Fig. 1.

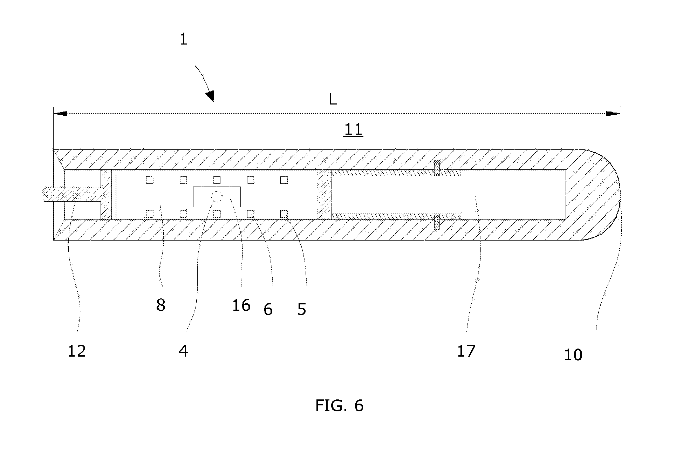

A partly cross-sectional view of the positioning tool 1 is shown in Fig. 6. The detecting unit 2 is arranged at a distance from the tip 10, which is approximately half the length L of the positioning tool. There is a space 17 in front of the detecting unit for mounting any other logging or measuring device which can make observations downhole. The detecting unit 2 provides the measurements for determining the position of each of the observations made by the logging or measuring device.

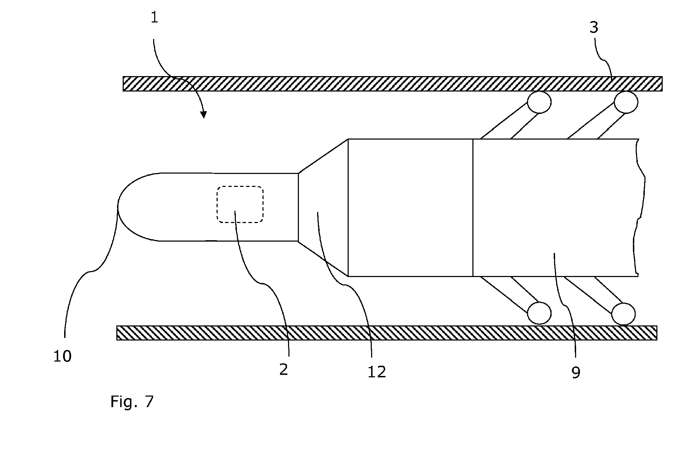

In another embodiment, the detecting unit is positioned elsewhere in the tool as shown in Fig. 7.

Fig. 7 shows a positioning tool 1 having a tip 10 and a longitudinal extension stretching from the tip towards the driving unit 9. As can be seen, the positioning tool 1 is surrounded by well fluid 202, and the detecting unit 2 is situated in the front of the tool. The positioning tool 1 is connected with the driving unit 9 in a connection joint 12. When the detecting unit 2 is arranged near the tip 9 of the tool 1, the measurements are substantially unaffected by the electrical field caused by the electricity running in the driving unit 9, and the measurements are thereby more precise.

As mentioned above, the positioning tool 1 may be connected with a driving unit 9, such as a downhole tractor, as shown in Fig. 7. When e.g. a leak is detected by another tool, the positioning tool 1 may identify the position of the leak. Subsequently, the leak can be repaired by another tool section in the same tool or by another tool in a second run.

The magnets 4 may be permanent magnets, electromagnets or any other suitable type of magnets. By using permanent magnets, no extra equipment is needed in order for the magnet to function.

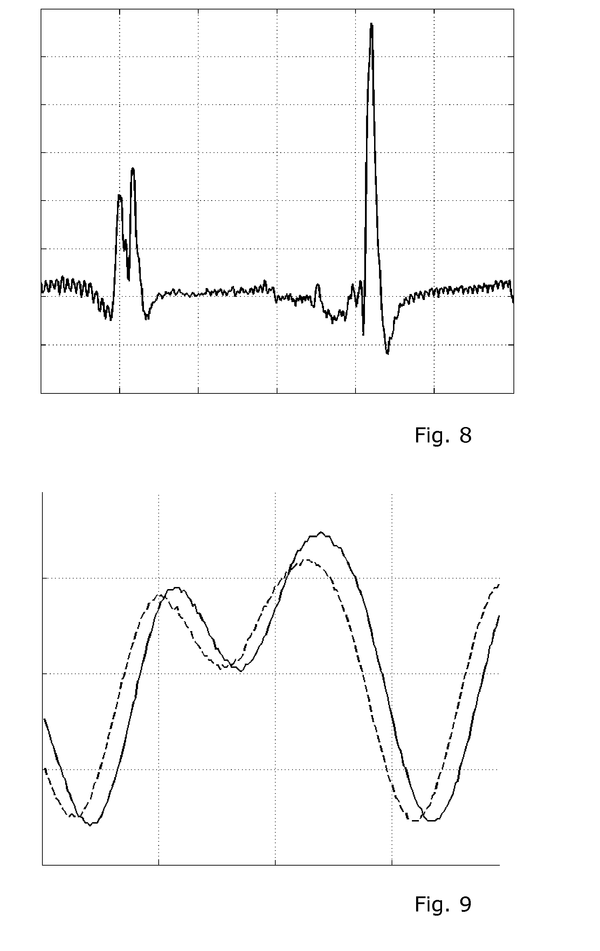

In Fig. 8, a graph of the measurements from one sensor is shown. As can be seen, the graph has two peaks, each representing the point where the sensor, and thus the tool, passes a casing collar 15.

The distance between the sensors 5, 6 may vary according to design. In Fig. 9, a graph of measurements made by the two sensors is shown. The distance between the curves represents the distance of the sensors in relation to one another. As can be seen, the two sensors detect the same changes in the magnetic field when passing the same position.

If the sensors 5, 6 are placed with a long distance between them, the variations in tractor speed may be missed or at least not detected instantaneously. In one embodiment, the distance between the two sensors 5, 6 is between 5 and 150 mm, preferably between 5 and 100 mm, more preferably between 10 and 50 mm, and even more preferably between 10 and 30 mm.

The sensors 5, 6 do not have to be arranged on a flat substance such as a plate 8. They may be positioned in individual plates or clamps as long as they are arranged in substantially the same plane.

The sensors 5, 6 conduct measurements at a sample rate between 1 and 5000 measurements per second, preferably between 100 and 2000 measurements per second, and more preferably between 250 and 1000 measurements per second.

The calculation of the velocity of the tool 1 is based on between 1 and 300 times per second, preferably between 10 and 100 times per second, and more preferably between 10 and 50 times per second.

The positioning tool 1 may comprise a calculation unit 415, such as a processor, for calculation of the velocity or the position of the tool.

The invention also relates to a system comprising a positioning tool 1 as described above and a calculation unit 415 positioned at a distance from the tool, e.g. above surface on an oil rig or vessel. The tool itself may have a calculation unit 415, meaning that some of the calculations are performed downhole in order to reduce the amount of data transmitted to the calculation unit above surface.

The sensors 5, 6 may be any type of suitable magnetic sensors, such as an anisotropic magnetoresistive sensor, capable of measuring the direction of the magnetic field from a magnet 4. By direction sensitive sensor is meant a sensor capable of measuring the direction of the magnetic field surrounding the sensor such as from a magnet nearby. When the tool 1 has an anisotropic magnetoresistive sensor, the determination of the position of the tool is independent of the velocity of the tool. Many types of anisotropic magnetoresistive sensors are very commonly available and therefore inexpensive, without being less reliable.

The choice of magnet type depends on the temperature downhole.

When using several magnets 4 in the same plane, each magnet must have a certain distance to the adjacent magnets to ensure that the casing 3 and the casing collars 15 can influence the direction of the magnetic field generated by the individual magnet.

The operation tool may be a logging tool, such as well flow imaging tool.

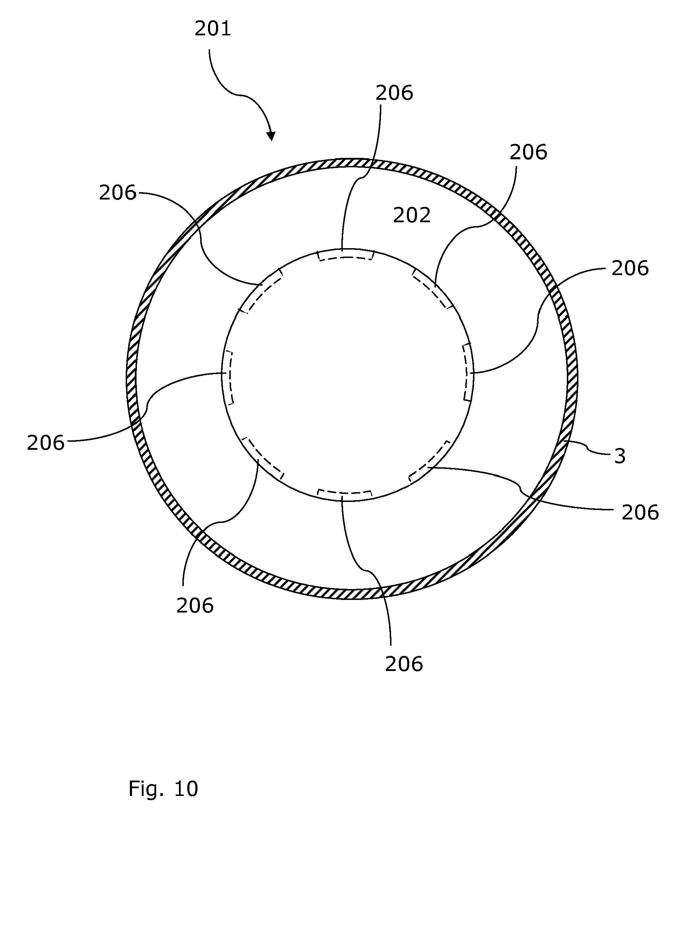

The logging tool 201 conducts capacitance measurements between two electrodes 206. In Fig. 10, a cross-sectional view of the logging tool 201 transverse to the longitudinal extension of the tool is shown. The logging tool 201 is surrounded by well fluid 202 as the logging tool is lowered into the well. In this case, the well is a casing 3 with a wall 204 defining a cross-sectional area between the wall and the outside of the tool 1. The tool 201 has a substantially cylindrical shape with a longitudinal axis and, when seen in cross-section, a periphery 205. Electrodes 206 are arranged in the periphery 205 of the tool and the fluid 202 thus flows between the electrodes and the wall 4. The electrodes 206 are arranged spaced apart and with an even distance between two adjacent electrodes creating a space between every two electrodes. The position of the electrodes 206 is illustrated by a dotted line.

The logging tool 201 is used to obtain an image of the distribution between the gas, oil, and/or water phases in the well fluid 202. To provide such an image, the tool 201 has means for measuring the capacitance between two electrodes 206 in all possible combinations giving n*(n-1)/2 capacitance measurements for n electrodes. When having eight electrodes 206, the image is created from 28 measurements of the capacitance. The capacitance measurements are sent to the surface where a calculation device calculates the permittivity distribution, and an image is created based on the permittivity distribution.

The space between every two electrodes 206 is substantially filled up with a non-conductive means, in this case a plastic material. The non-conductive means ensures that the electrodes 206 are fixed at a certain position, but as the non-conductive means do not function as guards, they do not influence the measurements of the logging tool 201 in the way grounded guards or guards having a fixed potential would.

In a prior art tool, grounded ribs/guards or ribs/guards ensuring a fixed potential are positioned in the space between the electrodes, thus limiting the capacitance measurements to a smaller area. This may lead to the assumption that the capacitance is distributed evenly in the radial direction, which is not always the case. In the present invention, the ribs/guards have been replaced by non-conductive means preventing such assumption is made, just as the capacitance measurements may also show an uneven distribution for all of the well fluid 202 and e.g. show if water is flowing in through a hole in the casing. Thus, a tomogram, i.e. an image of the distribution of the phases in the well fluid 202, can be calculated from the capacitance measurements.

The non-conductive means may be any suitable non-conductive material or a non-conductive gas, such as air. The non-conductive material may be any suitable material, such as ceramics or the like material, and the gas may be air. The non-conductive means may also be a combination of both non-conductive material and non-conductive gas.

The capacitance between two electrodes 206, e.g. i and j, depends on the relative placement of the electrodes and the permittivity of the fluid 202 surrounding them. In general, the capacitance moreover depends on the geometry and the permittivity distribution of the well. Since the sensitivity of the electrodes 206 is reduced when the distance from the electrodes is increased, the sensitivity matrix also has to be determined. When the geometry is fixed, any changes measured in the capacitance must be caused by the permittivity distribution alone and, thus, by a change in the flow.

For a known permittivity distribution, calculation of the capacitance using Gauss' Law on integral form is straightforward. By a permittivity distribution is meant the permittivity value at each point in two-dimensional space. The permittivity distribution can thus be represented as an image. For a homogeneous permittivity distribution, the capacitance is

$$C_{ij} = \frac{1}{u_0} \oint_j \varepsilon_0 \nabla u_i \cdot dl$$

where $C_{ij}$ is the capacitance between electrodes i and j, $e_i$ is the homogeneous permittivity, $u_i$ is the electric field when electrode i is activated, and is the amplitude of the excitation signal. The integral is closed around electrode j.

The value of the capacitance will change if the permittivity is changed. When providing a small and very localised perturbation in the permittivity, the sensitivity of the capacitance at each point can be determined. At some points, a change will affect the capacitance more than at others.

A sensitivity matrix can be calculated directly from the electric field of each electrode 206. Based on the sensitivity matrix, the changes in capacitance can be approximated from the permittivity distribution using the following equation:

$$\delta C_{ij} = S_{ij} \cdot \delta \epsilon$$

The above equation is the forward problem in determining the change of capacitance if the permittivity change is known. Since the permittivity distribution, i.e. the image, is the unknown variable, the inverse problem must be solved in order to determine the permittivity distribution and thus create the image showing the flow in cross-section.

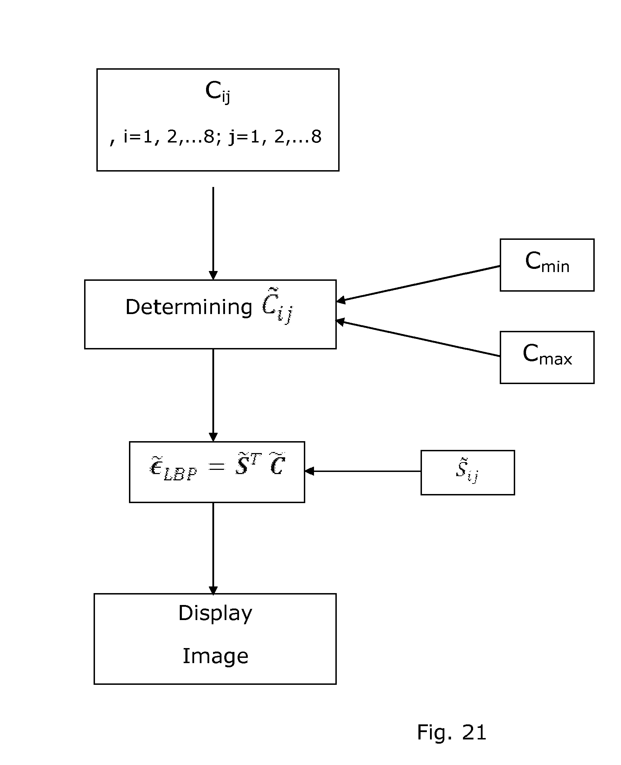

In order to create an image of the flow almost simultaneously with the measurements provided by the tool 201, Linear Back Projection (LBP) may be employed as an immediate solution to the inverse problem, providing a very good approximation of the flow. The method for determining the image or the permittivity profile of a cross-sectional view of a fluid 202 in an annulus surrounding the tool is shown in the flow chart of Fig. 21. However, a more precise determination can be calculated on the basis of the same measurements when needed.

One way of constructing a tomogram is done on the basis of a set of $\frac{(N-1)N}{2}$ pacitance measurements. The set is acquired by applying the excitation to one electrode, selecting a measuring electrode. The output voltage of the charge transfer circuit is then measured 32 times. The sum of those 32 measurements is considered a 'capacitance value'. When a complete set has been measured, the set is sent to over the wireline for topside processing.

At the topside, the set is combined with calibration data to create a normalised capacitance set:

$$\tilde{c} = \frac{c - c_{min}}{c_{max} - c_{min}}$$

The normalised capacitance is combined with the pre-calculated and normalised sensitivity matrix to create a tomogram.

The starting point for the calculation of a sensitivity matrix, S, is a simulation of the electric potential, inside the sensor, from a single electrode. The potential can be calculated via finite difference or finite elements methods, or even as an analytical solution to the governing partial differential equation. Whichever method is chosen, the electric field can be calculated as the gradient of the potential.

Because of the rotational symmetry of the sensor, the electric field from electrode $j$ can be found by rotating the field from electrode $i$ by $\frac{(j-i)\pi}{N}$ radians (if the electrodes are numbered in a counter-clockwise direction).

With a pixel basis, the sensitivity at the point k can thus be calculated from the electric fields by

$$S_{ijk} = \alpha_k \nabla u_i(x_k, y_k) \cdot \nabla u_j(x_k, y_k),$$

where $\alpha_\kappa$ is the area of the $k$'th pixel and $u_j$ is just a rotated version of $u_i$. Apart from a rotation, there are only $N-1$ distinct of these inner products. The entire set of $\frac{(N-1)N}{2}$ sensitivity matrices can be obtained by rotations of the $N-1$ first ones.

In a rotationally symmetric sensor, it is thus possible to calculate the entire set of sensitivity matrices from the electric field of just one of the electrodes.

In LBP, two calibration sets $(\epsilon_{min}, C_{min})$ and $(\epsilon_{max}, C_{max})$ are required for normalising measurements and normalising the sensitivity matrix below. By a calibration set is meant a set of 28 capacitances (in case of eight electrodes 6) measured with a known distribution - e.g. when the annular space between the electrodes and the casing wall 204 is filled only with air or only with water.

$$\hat{S}_{ijk} = \frac{S_{ijk}}{\sum_k S_{ijk}}$$

$$\hat{C}_{ij} = \frac{C_{ij} - C_{min}}{C_{max} - C_{min}}$$

$$\tilde{\varepsilon}_k = \frac{\varepsilon_k - \varepsilon_{min}}{\varepsilon_{max} - \varepsilon_{min}}$$

An index, k, has been added to explicitly show how each set of pixels in the sensitivity matrices are normalised. $C_{min}$ may be the capacitance when only gas is present between the electrodes 206 and the wall 204, and $C_{max}$ may be the capacitance when only water is present. When three phases, such as gas, oil, and water, is present, the calibration in order to determine $C_{min}$ and $C_{max}$ is still performed on only gas and water, respectively. The reason for this is that the capacitance of gas is the lowest and that of water the highest.

The normalised permittivity is approximated with a matrix equation and the LBP solution becomes:

$$\tilde{\varepsilon}_{LBP} = \tilde{S}^T \, \tilde{C}$$

Using this approach, a fast and simple approximation of the permittivity distribution may be achieved and an image representing the permittivity distribution may be created. The images typically appear somewhat smeared and accurate reproduction of small details cannot be expected. However, more accurate images can be created based on the measurements when needed. One way of creating a more accurate tomogram is known as the Landweber method.

More sophisticated methods employ different approaches to minimise the residual of the forward problem:

$$\varepsilon_{DIP} = argmin_\varepsilon \left| C - S\varepsilon \right|$$

This typically involves an iterative solution where the initial guess at the image is given by the LBP solution. Examples of popular choices are Landweber and Tikhonov regularisation. Independent of which of the above methods are used, the result is an approximation of the permittivity distribution in the well.

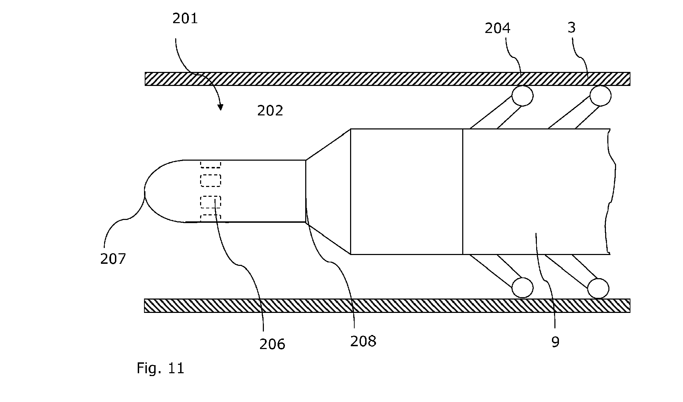

Fig. 11 shows a logging tool 201 having a tip 207 and a longitudinal extension extending from the tip towards the driving unit 9. As can be seen, the logging tool 201 is surrounded by well fluid 202 and the electrodes 206 are situated in the front of the tool. In Fig. 11, the electrodes 206 are arranged at a distance from the tip 207 of the tool of less than 20% of the total length L of the logging tool, preferably less than 10%, and more preferably less than 5%. The logging tool 201 is connected with the driving unit 9 in a connection joint 208. When the electrodes 206 are arranged near the tip 207 of the tool, the flow measured by the electrodes is substantially unaffected and the measurements are thus more precise. When the electrodes 206 are positioned at the previously mentioned distance from the tip 207, the driving unit 9 does not disturb the fluid 202 surrounding the tip and the electrodes.

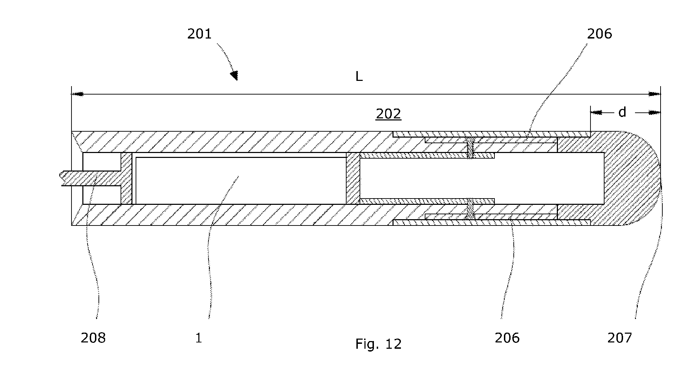

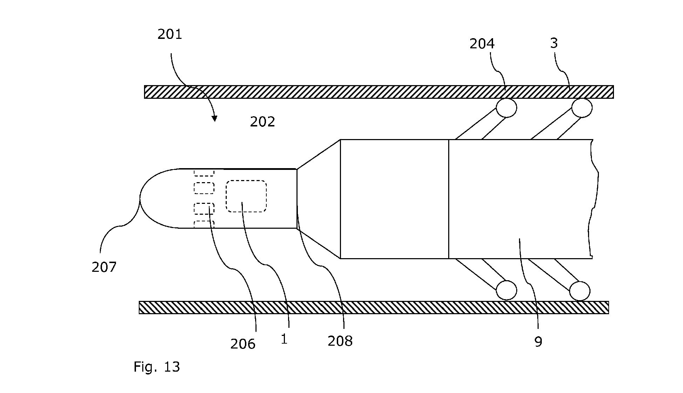

As mentioned, the logging tool 201 may be connected with a driving unit 9, such as a downhole tractor, as shown in Figs. 11 and 13. When a leak is detected, the capacitance measurements of the logging tool 201 do not give the position of the leak. To be able to determine the position of the leak, the logging tool 201 thus has to comprise a positioning device 1 as mentioned above and as shown in Figs. 12 and 13. When the position of the leak has been determined, the leak may be sealed by inserting a patch or liner.

When the patch has been inserted to seal off the leak, the logging tool 201 can be submerged into the well again to confirm that the patch has been positioned correctly and thus that the leak has been sealed. The positioning tool 1 makes it possible easily to determine the position of the patch, and the logging tool 201 may thus quickly be run into the well at the position just before the patch and begin the measuring of the flow. In this way, the logging tool 201 does not have to perform at lot of unnecessary measurements.

Prior art logging tools do not have a positioning tool 1 and, thus, a separate positioning tool is required to determine the position of a leak. When using prior art logging tools, measurements are performed for every ten feet and the position is calculated as an interval based on the number of measurements. Experience has shown that the patch used to seal the leak must have a length of at least 150 feet to make sure that it covers the leak.

When the logging tool 201 has a positioning tool 1, the patch used for sealing off a leak can be substantially smaller and the risk of having to place one patch on top of another, thus decreasing the internal diameter of the well, is substantially reduced.

A cross-sectional view along the longitudinal extension of the tool 201 is shown in Fig. 12, in which the electrodes 206 are positioned near the tip 207 of the tool at a distance d from the tip. The logging tool 201 has a length L and the electrodes are positioned at a distance of less than 15% of the length L from the tip 207.

The electrodes 206 are positioned in the periphery 205 of the logging tool. Outside the electrodes 206, a dielectric material is arranged forming a sleeve between the well fluid 202 and the electrodes. The tool 201 comprises a printing circuit (not shown). To improve the conductivity, the electrodes 206 are directly electrically connected to the printing circuit by means of screws instead of by means of a cord.

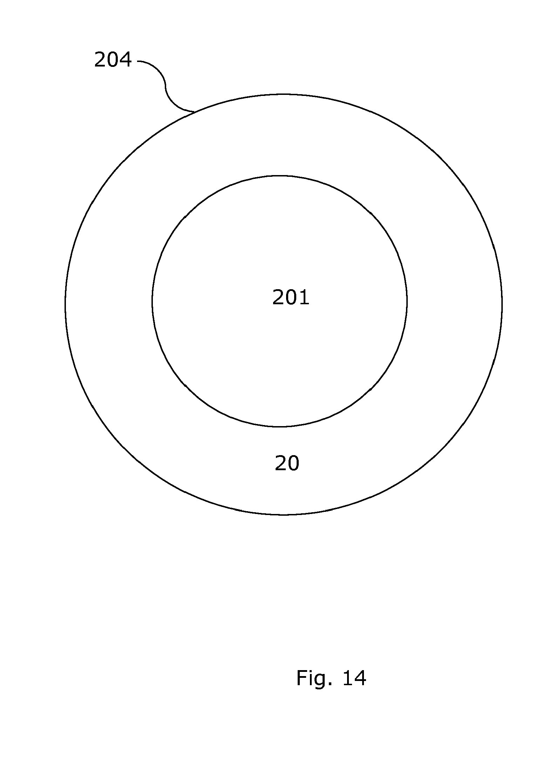

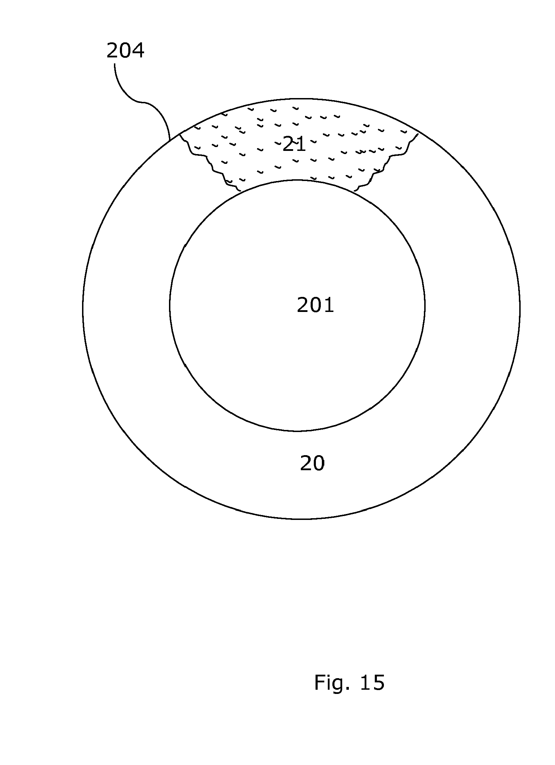

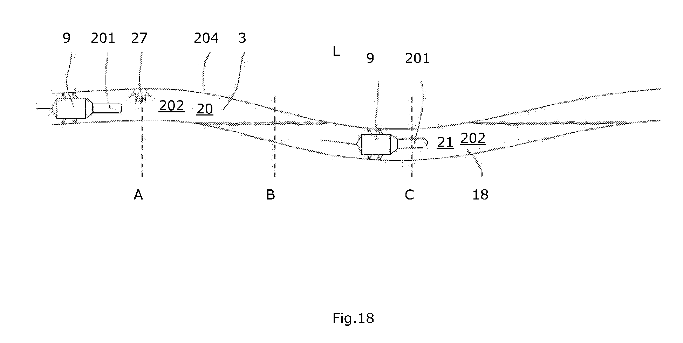

As described, an image is created from the capacitance measurements. In the images shown in Figs. 14-17, the logging tool 201 has entered a well filled with gas 20 and, at some point, the tool moves past a leak flushing the well with water 21. The logging tool 201 has been tested in a gas similar to the gas in the well, and the permittivity distribution for that gas is thus known. Similarly, the logging tool 201 has been tested in oil and water. Fig. 14 shows an image created from some of the early measurements, from which it can be seen that the fluid surrounding the logging tool 201 is only gas. Later on, the logging tool 201 passes a leak 27 as shown in Figs. 15 and 18 (indicated by the dotted line A in Fig. 18). From the image of Fig. 15 it can be seen that the permittivity has changed in an area of the fluid 202, and from test results it can be determined that the second phase of fluid must be water.

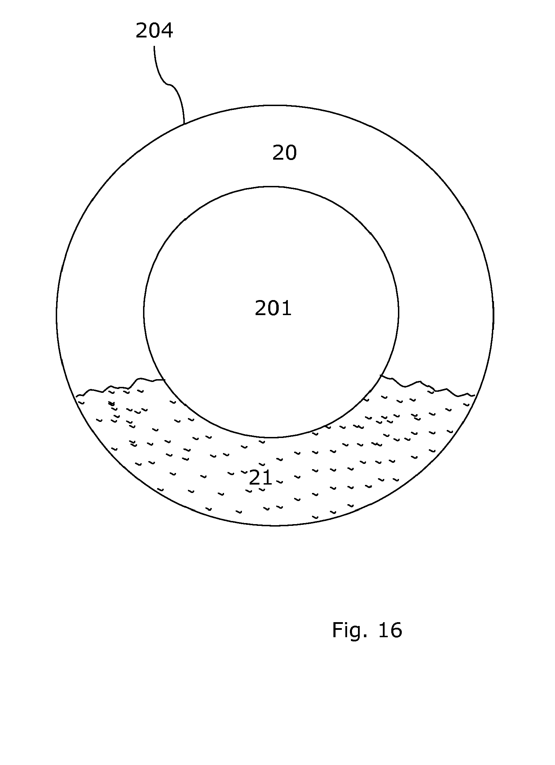

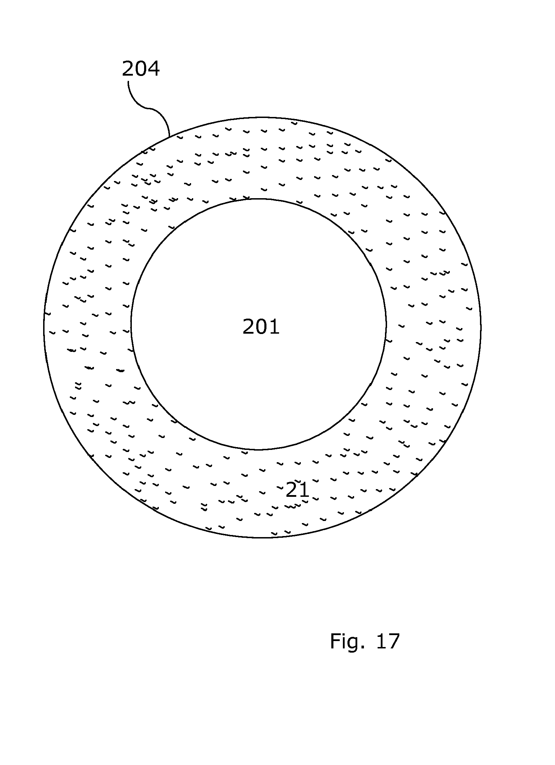

From the image of Fig. 16, it can be seen how the second fluid phase has come to take up a larger portion of the fluid 202 and has changed position, as water flowing in through a leak 27 in the top of the casing 3 will fall to the bottom of the casing and remain there. This is also shown in Fig. 18 (indicated by the dotted line B). The image of Fig. 17 shows that the logging tool 201 has reached a position in the well where water has filled up the whole area. This is also shown in Fig. 18 (indicated by the dotted line C). The casing 3 is not straight, but usually winds its way through the subsoil as shown in Fig. 18. Pockets 18 may thus occur which may, as in this case, be filled with water. However, to seal off the leak 27 and prevent the water from entering, it is necessary to determine the position of the leak, not just the position in which most water is present.

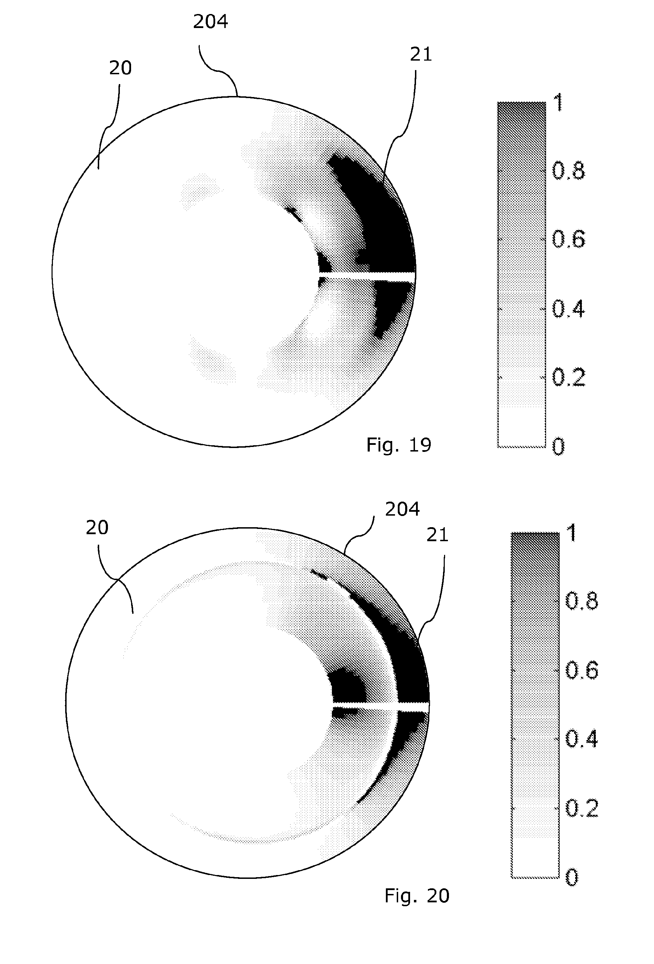

Figs. 19 and 20 each show a cross-sectional tomogram or image of the casing filled with gas comprising a water bubble. The water bubble is indicated by the black area and the gas by the white areas. The image of Fig. 19 has been generated using the fast LBP method, whereas the image of Fig. 20 has been generated using the slower, more accurate Landweber method.

An orientation device, such as an accelerometer, can be provided in the logging tool 201 to help determine the orientation of the logging tool. However, the orientation device can be dispensed with as the orientation of the logging tool 201 is usually the same whether in a vertical stretch and/or a horizontal stretch of the well.

By a continuous measurement of the capacitance between the electrodes is meant a sample rate of at least $n*(n-1)/2$ capacitance measurements per second for n electrodes, more preferably $2*n*(n-1)/2$ capacitance measurements per second for n electrodes, and even more preferably $10*n*(n-1)/2$ capacitance measurements per second for n electrodes.

By a representation of $E_{LEP}$ on a data storage media is meant either the measured data in itself or the data normalised using some sort of factor.

The operation tool may also be a scanning tool 301 able to produce images of different objects in e.g. a well casing.

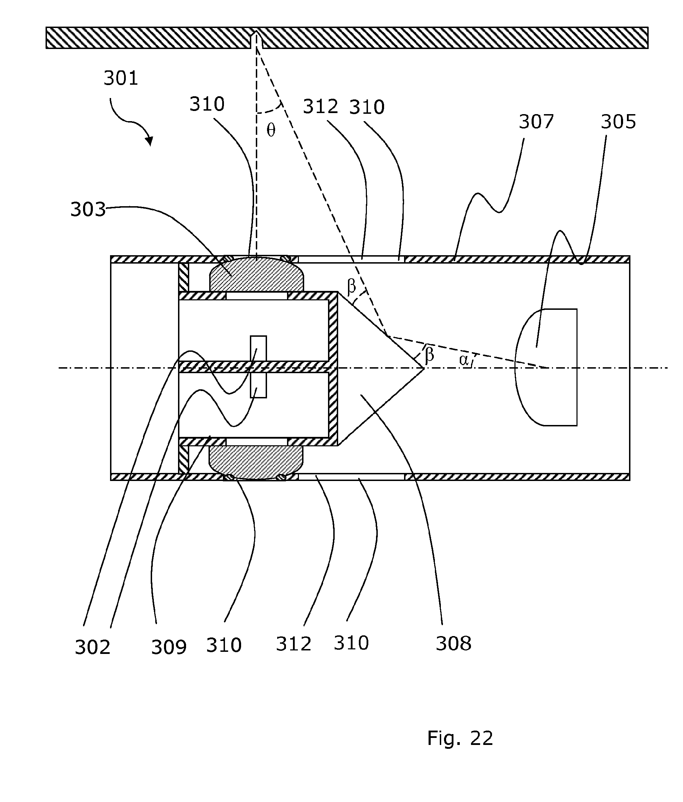

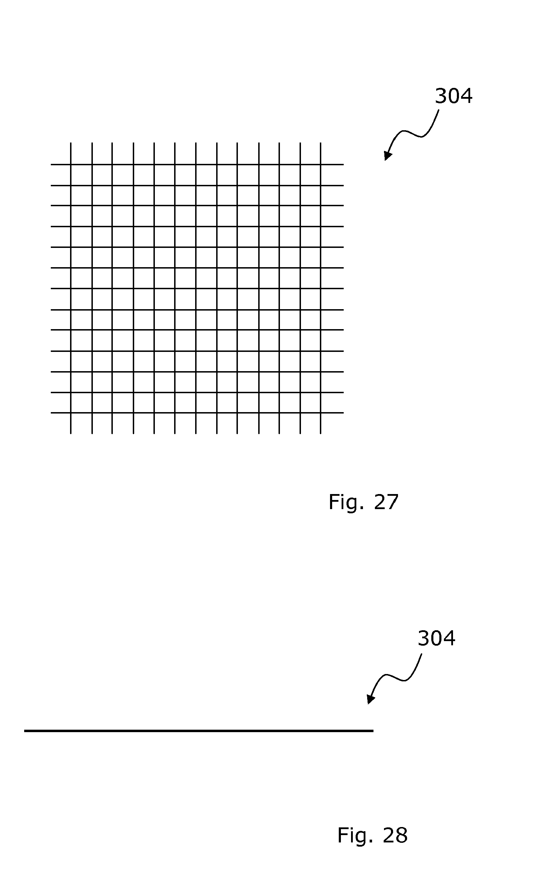

In Fig. 22, part of such a scanning tool 301 is shown. The scanning tool 301 is capable of scanning an object downhole, e.g. line by line, when the tool or part of the tool is moved in relation to the object 306 to be scanned. The scanning tool 301 comprises an emitting device 302 for emitting radiation into a lens 303. The lens 303 transmits the radiation in a predetermined pattern 304 of radiation, such as a line as shown in Figs. 22, 23, and 28, a grid as shown in Fig. 27, or another suitable pattern. The pattern 304 is reflected on the inside wall of the casing or borehole and is subsequently detected by a receiving device 305.

In the following, the invention is explained on the basis of an object present in the well, such as a valve arranged as part of the casing wall 204, perforations in the casing 3, a sleeve, a packer, or the like hardware elements in a well. Thus, the scanning tool 301 may be used to detect whether a sliding sleeve is open, partly closed, or closed. Subsequently, another operation tool can be submerged in order to close or open the sleeve, or clean the object off scales. When the other operation tool has finished its operation, the scanning tool 301 can be submerged once more to inspect the object again.

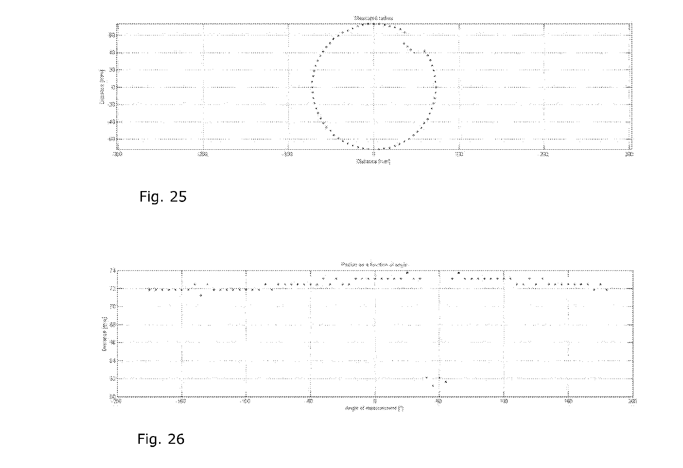

In this way, the pattern 304 of radiation is reflected on an object 306 to be scanned and the reflected radiation is received in the receiving device 305, which is a camera, an image sensor, or the like processor. The receiving device 305 may have a lens provided in front of the camera seen in relation to the emitting device 302. The scanning tool 301 comprises an elongated housing 307 with a plurality of slots or openings 310 allowing radiation in the form of light to be emitted from the tool and enter the tool again. Inside the housing 307, the torus-shaped lens 303 is illuminated from within by the emitting device 302. In order to illuminate the whole lens 303, several emitting devices 302 are arranged inside the torus. In Fig. 22, twenty emitting devices 302 are arranged inside the lens 303. The lens 303 guides the radiation into a pattern 304, such as a line, and irradiates the object 306 to be scanned in that pattern. The pattern 304 is reflected by the surface of the object 306 to be scanned and returned in an angle θso as to be reflected by a mirror 308 before being received in the receiving device 305. The mirror 308 is cone-shaped and, in this embodiment, the pattern 304 is a line which is reflected as a circle by the mirror, as illustrated in Fig. 26. The mirror 308 is mounted onto the housing 307 by means of a mounting device 309 onto which the emitting device 302 is also fastened. The mounting device 309 is provided with a circumferential slot allowing the radiation of the emitting devices 302 to illuminate the lens 303. Having a mirror 308 makes it possible to arrange the receiving device 305 axially displaced in relation to the lens 303.

Thus, the lens 303 has a radial extension transverse to the longitudinal extension of the tool 301. The emitting devices 302 are arranged so that they radiate the lens 303 in a radial direction. The mirror 308 is arranged on one side of the lens 303 at an axial distance from the lens 303 in relation to the axis of the tool 301 and tapers away from the emitting devices 302 and the lens. The receiving device 305 is arranged at an axial distance from the mirror 308 even further away from the lens 303.

In another embodiment, only three emitting devices 302 are arranged inside the lens 303. Such emitting devices 302 must have a wider emitting range in order to illuminate the whole lens 303.

Sealing means 11 in the form of an O-ring is arranged between the lens 303 and the housing 307 in order to seal off the inside of the tool 301. Furthermore, the slot 310 through which the reflected radiation enters the housing again may be provided with a window 12 also sealing off the inside of the housing, but also letting the light through.

In another embodiment, the surrounding part of tool 301 is a glass housing which surrounds a frame part of the tool, which in this case is also the mounting device 309 of the tool.

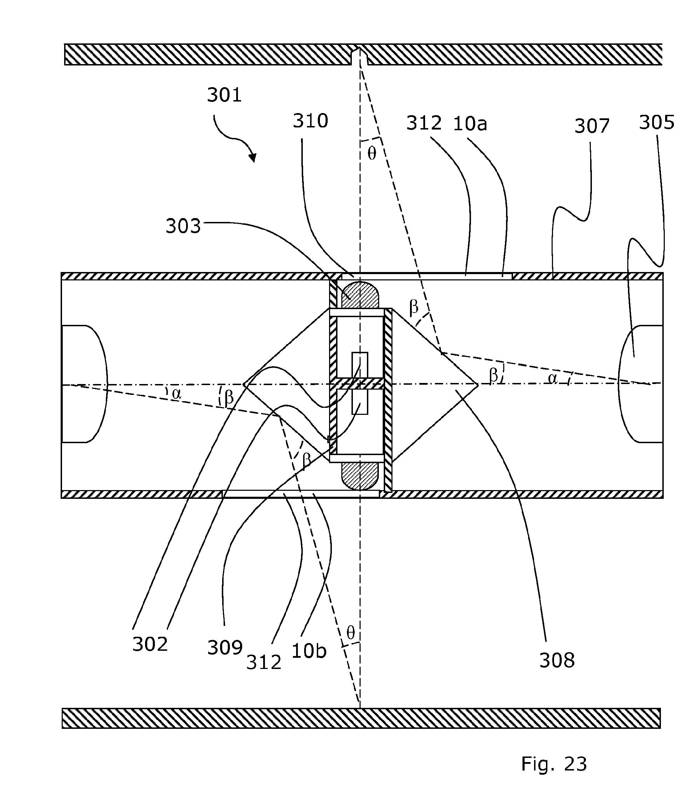

In Figs. 22 and 23, the lens 303 generates a radiation pattern 304 in the form of a line and is a piano-convex cylinder lens. However, the lens 303 may be any suitable lens capable of generating a pattern, such as a line, a grid, etc.

Another embodiment of the tool 1 is shown in Fig. 23, in which embodiment the tool has two mirrors 308 and two receiving devices 305 positioned opposite each other so that a mirror and a receiving device is positioned on each side of the lens 303. In this embodiment, the mounting device 309 has a frame configuration providing a strong tool design. The frame has openings 310 displaced in relation to one another so that a first opening 10a is displaced in relation to a second opening 10b. Each opening 10a, 10b is adapted to both emit radiation and let in reflected radiation to be reflected by the mirror 308 and transmitted into the receiving device 305. Each of the receiving devices 305 receives only part of the reflected radiation so that one part of the pattern 304 is received in one receiving device 305 and another part is received in the other receiving device 305. When these parts of the reflected pattern 304 are joined, the whole pattern can subsequently be processed as explained below.

The entire mounting device 309 may be surrounded by only one glass housing providing a simple encapsulation of the mounting device and a design which seals off the tool 301 towards the outside well fluid 202 in a simple manner.

The receiving device 305 of Figs. 22 and 23 receives the reflected line as a circle or parts of a circle due to the conical shape of the mirror 308. The receiving device receives light from a small part of the casing and each point on the object, e.g. the inside of the casing 3, is mapped to a point between two concentric circles in the two-dimensional image plane. Thus, the radiated line in the image corresponds to a plurality of points on the casing 3.

In this embodiment, the pattern 304 is a line emitted as a circle all the way around the tool 301 towards the inside of the casing to scan the casing. The pattern 304 may be any kind of pattern emitted as a closed contour on an object 306 to be scanned, in the illustrated example as a circle which is received in the tool 301 again as a circle if the inside of the casing wall 204 is smooth, or as parts of concentric circles if the casing wall has a projection or a indentation.

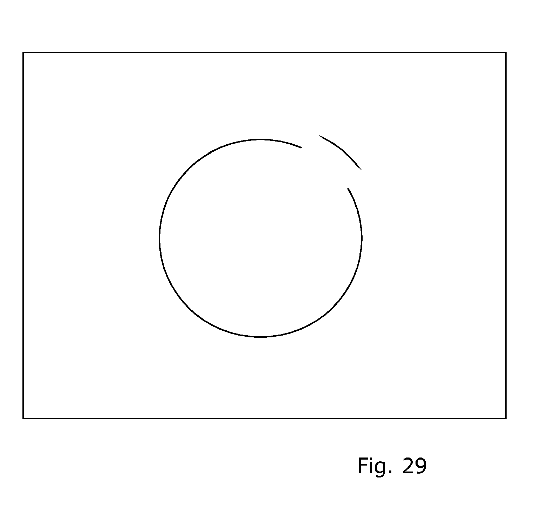

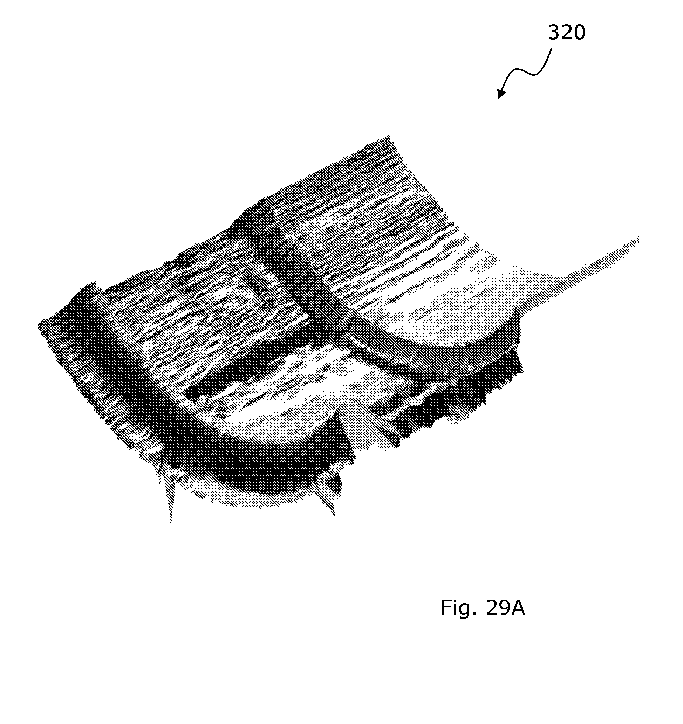

Moreover, an image sensor connected with the receiving device 305 converts the image of a circle or parts of concentric circles, as shown in Fig. 29, into data, as shown in Fig. 25. In Fig. 29, the circle has been broken and a piece of the circle has been displaced. The reason for this is that the emitted line has been reflected on an object having an indentation corresponding to the piece of the line that has been displaced. The data in Fig. 25 show the same displacement.

The data in Fig. 25 is viewed in a different way in Fig. 26, also illustrating the emitted line. At the angle 50, four data points have been displaced in the same way. If the object had had several indentations, a corresponding number of points would have been displaced. If the object had had a projection instead of an indentation, the piece of line would have been displaced in the opposite direction, i.e. outwards and away from the centre, in Fig. 26.

When the images of Fig. 29 are combined in sequence, an image of the object 306 to be scanned is created as a scanned image 320 of either the whole section of the object or the inside of the well as shown in Fig. 29A. Fig. 29A shows an image of a sleeve scanned line by line by the scanning tool 301 created by combining the sequence of reflected lines. Having such a scanned image 320 of a whole section of the sleeve makes it possible to determine whether the sleeve is open, partly opened, or closed, and whether scales fasten to the sleeve hinder the operation of the sleeve.

By scanning an object line by line or in another pattern, an image can be created picturing the object or part of the object in a way which makes it possible for an operator to evaluate the object by visually inspecting the scanned image and thus to determine what to do in order to fix a certain problem. The entire well may be scanned in this way in order to evaluate the condition of the well and to determine which parts of the well needs repair work, if any.

The distance between the displaced piece and the rest of the circle indicates the depth of the indentation or the height of the projection. Similarly, the length of the displaced line piece in relation to the length of the circumference of the rest of the circle indicates the circumferential length of the indentation in the object 306 to be scanned. Thus, an exact image of the whole object can be calculated from the data retrieved when scanning the object.

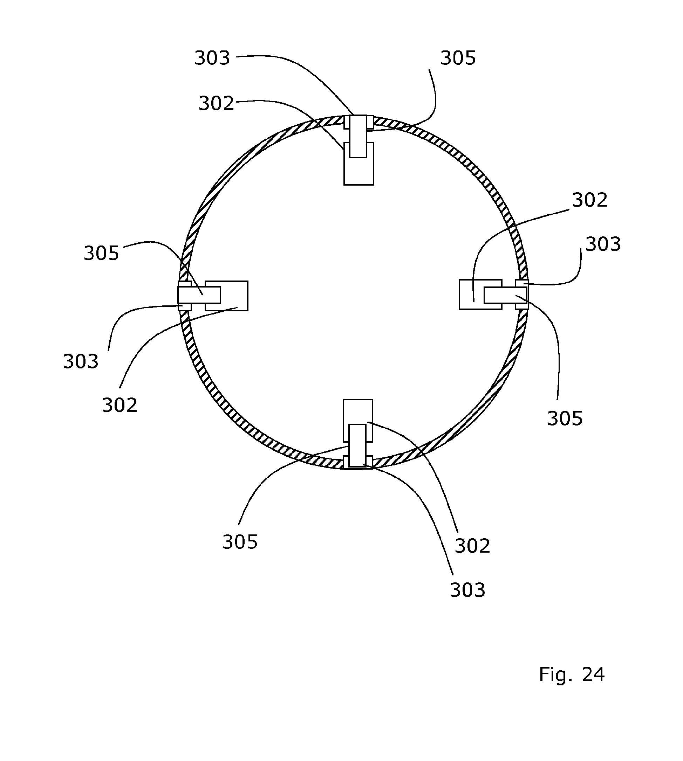

In Fig. 24, the scanning tool 301 comprises four lenses 303 arranged spaced apart along the periphery of the tool housing 307. Each lens 303 is illuminated by an emitting device 302 situated radially behind the lens in a direction towards the centre of the tool 301. Each lens 303 is capable of transmitting a line radially, the lines of the four lenses thus overlapping each other and together defining one circumferential line. Next to each lens 303 in the axial extension of the tool, a receiving device 305 is arranged for receiving the line when reflected by the object. In the embodiment of Fig. 24, no mirror is needed in order to scan the object, since the each receiving device 305 is arranged next to a lens 303 receiving the reflected radiation radially.

In some cases, more lenses 303, emitting devices 302, and receiving devices 305 may be needed in order to scan an object depending on the object itself, the distance to the object, and the fluid 202 in the well. The more transparent the well fluid 202, the less illumination is needed for scanning the object properly.

In another embodiment, only one lens 303, emitting device 302, and receiving device 305 are arranged in the tool 301. The tool 301 is then at least partly rotated to scan the inside of the well. The tool 301 thus comprises rotation means for rotating part of the tool or the whole tool. In this case, the pattern 304 may be a single point rotated into creating a line on the inside of the casing wall 204.

The lens 303 and the emitting device 302 may be arranged in the tool 301 as one unit, e.g. comprised in a line generator. Furthermore, the tool 301 may comprise several lenses 303 for each emitting device 302, resulting in the creation of a grid as shown in Fig. 28, or the lens may be covered in order to create the grid pattern. In another embodiment, the emitting device 302 comprises a line generator.

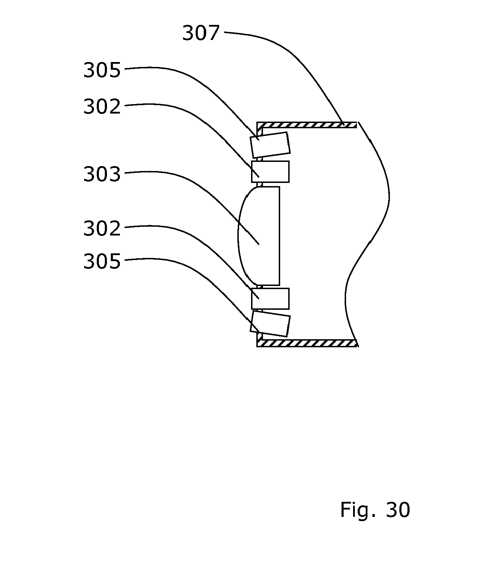

As shown in Fig. 30, the pattern 304 may be emitted in front of the tool 301 by several emitting devices to obtain information concerning objects in front of the tool, such as a valve, or objects positioned as part of the casing wall 204, but narrowing the casing 3, such as a "no-go landing nipple" or the like. As can be seen, the cameras are angled towards the centre axis of the tool 301 and they are thus able to detect the same pattern 304 from different angles, creating a three-dimensional image of the object. In another embodiment, the pattern 304 may be created by a grid generator arranged behind the lens 303 in Fig. 30 instead of by emitting devices 302 arranged around the lens in front of the tool 301.

The scanning tool 301 may be used as a positioning tool 1, since it is capable of detecting a casing joint, a sleeve, or another object. Based on the information on the design of the object, the images can be put together to match the dimensions of the known object and, based on information on the frequency with which the images are taken, it is possible to estimate the velocity of the scanning tool 301. In this way, the scanning tool 301 can be used to verify the position of the positioning tool 1.

The positioning tool 1 of the downhole system 100 determines the position of each image. If a leak is detected, an operation tool may thus subsequently be submerged at the exact position in order to seal off the leak.

The images may be received and at least partly processed by the receiving device 305 at a rate of 10-200 images per second, preferably 20-100 images per second, and even more preferably 20-50 images per second. When an image is received, it is converted into data, such as electronic signals. This data is compared to the data of the image previously taken and only the differences between the data are communicated to the top of the well or above surface to reduce the total amount of data. When the amount of data is thus reduced, an image can quickly be created on a PC screen, making it possible for the operator to follow the investigation as it is performed.

The data may also be compressed in conventional ways before being sent to the top of the well or above surface. It may also be downloaded into a buffer, such as a data memory. If no change is detected, the scanning tool 301 may then transmit a signal to the top of the well that there is no change.

The mirror 308 may have any suitable shape, such as a pyramid shape, a semi-sphere, or the like.

The emitting device 302 emits electromagnetic radiation with a frequency of $10^{11}$-$10^{19}$ Hz, such as X-rays, UV, visible light, and infrared light. The emitting device 302 may thus be a laser or another radiation device.

When the well fluid 202 which the radiation of the scanning tool 301 has to penetrate is water or gas, light having a frequency of 750 nm is sufficient. However, when the fluid is mostly oil, the emitted radiation could be another type of radiation, such as radiation closer to the infrared area or closer to UV.

The receiving device 305 may be a camera or an image sensor converting an optical image/pattern to an electric signal.

The tool 301 may also comprise a driving unit 9 for moving at least the lens 303 and the receiving device 305 along the longitudinal axis of the tool for conducting a second measurement at a distance from the first measurement. The object is thus scanned by emitting subsequent patterns at a distance from the previous emitted pattern, providing a sequence of measurements by repetition.

The driving unit 9 may be a conveying unit arranged inside the tool 301, so that only the lens 303 and the receiving device 305 are moved in relation to the tool along its longitudinal axis.

The downhole system 100 may also be a ranging system 401 for controlling a drilling process downhole, the ranging system having a longitudinal direction. When drilling a borehole, it is very important to be able to control the drilling direction and to know the orientation of the drilling head to ensure that the borehole is positioned at the predetermined position.

When using steam assisted gravity drainage (SAGD) to exploit the oil out of the ground, two boreholes must be drilled having substantially the same distance from each other along almost all of their horizontal extension to ensure that the steam penetrates the formation along almost the entire horizontal extension of the boreholes.

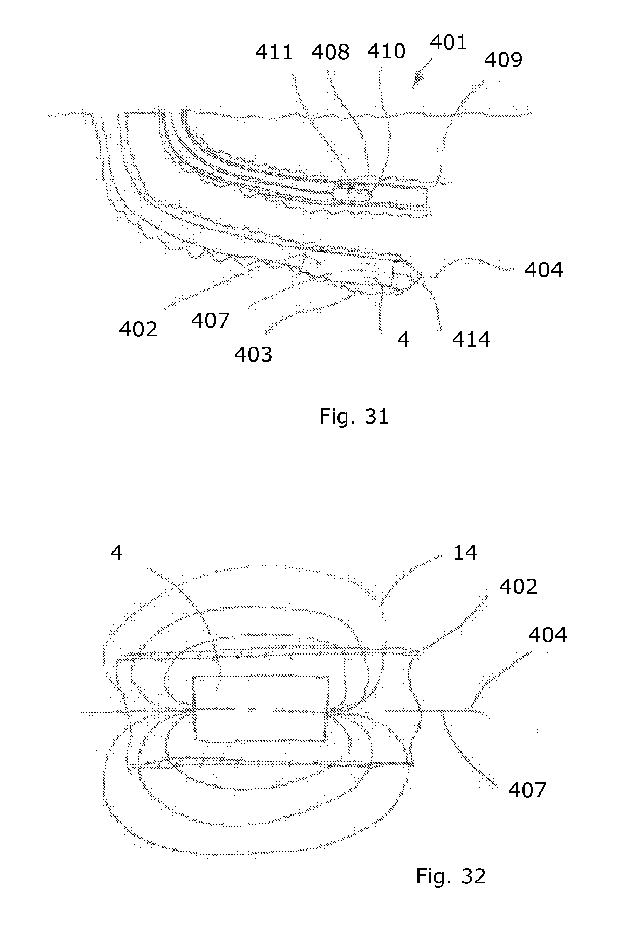

In the ranging system 401, the operation tool is a drilling tool 402 for drilling a new borehole near an existing borehole as shown in Fig. 31. The drilling tool 402 comprises a drilling head 414 for drilling into the formation, and it further comprises a magnetic field source 4 generating a magnetic field 14, which can be detected by the sensing tool 408 in order to determine the distance between the drilling tool 402 and the sensing tool 408 while drilling and to determine the orientation of the drilling head. In order to ensure that the boreholes are drilled in the predetermined position, one of the drilling tools 414 or the sensing tool 408 may also have a positioning tool 1 as described above.

The ranging system 401 may also be used while drilling two new boreholes. When drilling two boreholes at substantially the same time, the magnetic field source 4 is arranged in one drilling tool 402 and the sensor unit 410 of the sensing tool 408 is arranged in, or in connection with, another drilling tool 402. By calculating the measurements conducted by the sensor unit 410, the drilling direction of the drilling tools 402 can be adjusted to ensure that the distance between the two boreholes remains substantially the same. In order to ensure that the boreholes are positioned in the predetermined position, one of the drilling tools 402 may comprise a positioning tool which is able to determine the position of the drilling tools in relation to the starting point or another known position.

When the downhole system 100 is a ranging system 301, the positioning tool 1 may be comprised in the sensing tool 408, in which case the magnet 4 may be arranged in the drilling tool 402 making it possible to use the magnetic field source for both the positioning 1 and the sensing tool 408. However, the positioning tool 1 may also comprise a magnet 4 itself, in which case the operation tool is either the drilling tool 402 or the sensing tool 408.

When the ranging system 401 comprises a positioning tool 1, an exact position of the whole operation can be determined. The sensing tool 408 is able to determine the position and direction of the drilling head 414 in relation to the sensing tool 408, and the positioning tool 1 is able to determine the position of the sensing tool 408 in the well of the second borehole. In this way, the drilling operation can be performed more precisely.

In Figs. 31 and 32, the drilling tool 402 has a tool axis 404 and the magnetic field source 4 has a magnetic field source axis 407 which is substantially coincident with the tool axis 404. When having substantially coincident axes, the magnetic field source 4 and thereby the drilling tool 402 do not have to rotate in order for the sensor unit 410 to conduct measurements. In prior art tools, the conducting of measurements is dependent on the magnetic field source rotating while conducting the measurements.

When the drilling tool 402 and thereby the drilling process stops, for instance if the drilling tool 402 has broken down, the sensing tool 408 of the present invention is still capable of sensing the magnetic field 14 and thus of continuing to conduct measurements because the magnetic field source axis 407 is parallel to the tool axis 404.

The magnetic field source 4 may be any suitable electromagnet or permanent magnet. By using an electromagnet, the north and south poles can switch, and the sensor unit 410 is thereby better able to conduct measurements.

The sensor unit 410 comprises at least two magnetometers and, in Fig. 31, the sensing tool 408 has three magnetometers, enabling it to calculate an exact position and direction of the drilling head 414 in relation to the sensing tool as well as the direction in which the drilling head is drilling. When the distance is increased or decreased, the drilling direction of the drilling head 414 is adjusted so that the distance becomes the same again, and the drilling direction is then restored. Each magnetometer measures the strength of the magnetic field 14 as three vectors.

In Fig. 31, the sensing tool 408 comprises a driving unit 9 for driving the tool in the longitudinal direction of the second borehole 409. The sensing tool 408 may comprise means 412 for adjusting the position of the sensing tool, enabling the sensing tool to move back and forth in the borehole to be as close as possible to the drilling tool 402.

The drilling tool 402 may also comprise a driving tool if the drilling process is not performed by means of coiled tubing or drill pipes.

In Fig. 31, the first borehole 403 is the borehole to be drilled, and the second borehole 409 is an existing borehole, but may also be a well or another kind of hole in the formation.

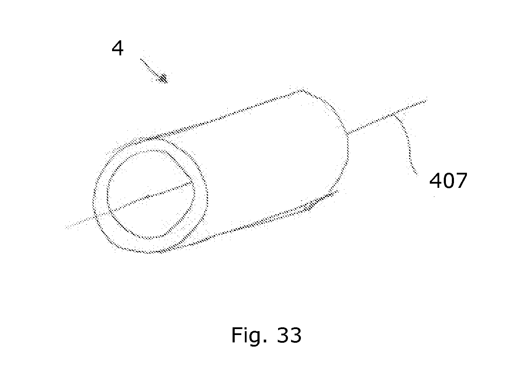

As can be seen in Figs. 32 and 33, the magnetic field source 4 has a through hole 413, allowing high-pressurised fluid running in the centre of the drilling tool 402 for driving the drilling head 414 of the drilling tool to pass through the magnetic field source 4 without being diverted and thereby lose energy. This is especially convenient when the drilling tool 402 is driven by pressurised fluid through drill pipes or coiled tubing.

In order to calculate the distance between the drilling head 414 and the sensing tool 408 and the orientation of the drilling head based on the measurements, the ranging system 401 comprises a calculation unit 415 for processing strength measurements of the magnetic field 6 measured by the sensor unit 410.

The position of the magnet, relative to the sensor, $r$, is calculated as the solution to a minimisation problem. The expression for the field of a magnetic dipole in vector notation is:

$$B = \frac{\mu}{4\pi} \left( \frac{3(d \cdot r)r}{r^5} - \frac{d}{r^3} \right)$$

where $\mu$ is the permeability, d is the dipole vector, r is the position vector, and r is the length of the position vector. This can be rearranged into:

$$-\frac{\mu}{4\pi} d = r^3 \left( B - \frac{3}{2r^2} (r \cdot B)r \right).$$

If the field is measured at two different places, the dipole vector can be eliminated from the above equation and the following expression emerges:

$$\|r\|^3 \left( B - \frac{3}{2\|r\|^2} (r \cdot B)r \right) = \|r + s\|^3 \left( B - \frac{3}{2\|r + s\|^2} ((r + s) \cdot B)(r + s) \right)$$

which has r as the only variable and where $s$ is the relative position between the two measurements. The position of the magnet with respect to the sensor, r, can be found by minimisation of a residual based on the equation above, the expression thus being:

$$r = \arg\min_r \left\| \|r\|^3 \left( B - \frac{3}{2\|r\|^2} (r \cdot B)r \right) - \|r + s\|^3 \left( B - \frac{3}{2\|r + s\|^2} ((r + s) \cdot B)(r + s) \right) \right\|$$

After finding the relative position of the magnet, the dipole vector can be calculated directly by insertion into equation 1.

By fluid or well fluid 202 is meant any type of fluid that may be present in oil or gas wells, such as natural gas, oil, oil mud, crude oil, water etc. By gas is meant any type of gas composition present in a well, completion or open hole, and by oil is meant any type of oil composition, such as crude oil, an oil-containing fluid etc. Gas, oil and water fluids may therefore all comprise other elements or substances than gas, oil and/or water, respectively. The fluid may also be a combination of gas, oil, water and small solids in the fluid.

By a casing 3 is meant all types of pipes, tubings, tubulars etc. used downhole in relation to oil or natural gas production.

In the event that the tools are not submergible all the way into the casing 3, a downhole tractor can be used to push the tools all the way into position in the well. A downhole tractor is any type of driving tool capable of pushing or pulling tools in a well, such as a Well Tractor®.

Although the invention has been described in the above in connection with preferred embodiments of the invention, it will be evident for a person skilled in the art that several modifications are conceivable without departing from the invention as defined by the following claims.

**Claims**

1. Downhole system (100) for performing an operation in an exact position in a well, comprising:

   - a positioning tool (1) for determining the position in a casing (3) downhole, the positioning tool having a longitudinal axis and comprising:
   - a detecting unit (2) comprising:
   - at least one magnet (4) for generating a magnetic field,
   - a first sensor (5) arranged in a first plane (7) and at a first distance ($d_1$) from the magnet for detecting changes in the magnetic field, and
   - a second sensor (6) arranged in the same first plane and at a second distance ($d_2$) from the first sensor along the axis also for detecting changes in the magnetic field, and
   - an operation tool,

   wherein the sensors detect changes in the direction of the magnetic field.

2. Downhole system according to claim 1, wherein the sensors detect changes in the direction of the magnetic field so that each sensor measures a direction ($\theta$) of the magnetic field in that sensor.

3. Downhole system according to any of the preceding claims, wherein the first and the second sensor are arranged on one side of the magnet, and a plurality of sensors are arranged on the other side in the first plane.

4. Downhole system according to any of the preceding claims, wherein the magnet is arranged on one side of a plate (8) and an additional magnet is arranged on another side of the plate so that two repelling poles of the magnets are facing one another.

5. Downhole system according to any of the preceding claims, wherein the operation tool is a logging tool (201) for determining properties of a fluid (202) surrounding the tool arranged downhole in a casing (3) comprising a wall (204) and having a longitudinal extension, the logging tool having a substantially longitudinal cylindrical shape with a longitudinal axis and, when seen in cross-section, a periphery (205), wherein the logging tool comprises:

   - a plurality of electrodes (206) arranged spaced around the longitudinal axis in the periphery of the tool so that the fluid flows between the electrodes and the casing wall, and
   - a means for measuring the capacitance between two electrodes in all combinations giving n*(n-1)/2 capacitance measurements for n electrodes.

6. Downhole system according to claim 5, wherein the logging tool has a space (17) between every two electrodes, which space is substantially filled up with a non-conductive means.

7. Downhole system according to any of claims 5-6, wherein the means for measuring provides a continuous measurement of the capacitance between the electrodes, and wherein the means for measuring measures a capacitance between two electrodes at a rate of at least 1 measurement of the capacitance per second, preferably at least 5 measurements per second, and more preferably at least 10 measurements per second.

8. Downhole system according to any claims 1-7, wherein the operation tool is a scanning tool (301) for scanning an object downhole, the tool having a longitudinal axis and comprising:

   - an emitting device (302) for emitting radiation,

- a lens (303) for transmitting the radiation in a predetermined pattern (304) of radiation, and
- a receiving device (305),

wherein, in a first position of the tool, the pattern of radiation is reflected on the object (306) to be scanned and the reflected radiation is received in the receiving device resulting in a first measurement.

9. Downhole system according to claim 8, wherein a second measurement of the scanning tool is conducted in a second position of the scanning tool.

10. Downhole system according to claim 8 or 9, wherein the scanning tool further comprising a driving unit (9) for moving at least the lens and the receiving device along the longitudinal axis and conducting a second measurement at a distance from the first measurement and in this way scan the object by emitting the pattern at a distance from the previous emitted pattern, and by repetition thus providing a sequence of measurements.

11. Downhole system according to any of claims 8-10, wherein the scanning tool further comprising a mirror device (308) for reflecting the pattern reflected by the object before it is received in the receiving device.

12. Downhole system according to claim 11, wherein the mirror is conical.

13. Downhole system (1) for controlling a drilling process downhole, wherein the system is a ranging system (401) having a longitudinal direction and comprising:

    - a drilling tool (402) for drilling a first borehole (403), the drilling tool having a tool axis (404) and a magnetic field source (4) generating a magnetic field (14) and having a magnetic field source axis (407), and
    - a sensing tool (408) arranged in a second borehole (409) for measuring the magnetic field by means of a sensor unit (410) and comprising the positioning tool according the any of the preceding claims,

    wherein the magnetic field source axis is substantially parallel to the tool axis.

14. Downhole system according to claim 13, wherein the magnetic field source axis is substantially coincident with the tool axis.

15. Downhole system according to any of the preceding claims, further comprising a calculation unit (415) for processing strength measurements of the magnetic field measured by the sensing tool and/or for processing capacitance measurements measured by the electrodes.

Fig. 1

Fig. 2

Fig. 3

A

15

5

3

6

3

A

Fig. 4

A-A:

Fig. 5

FIG. 6

Fig. 7

Fig. 8

Fig. 9

Fig. 10

Fig. 11

201    L    202    206    d

208    1    Fig. 12    206    207

Fig. 13

204

201

20

Fig. 14

204

21

201

20

Fig. 15

Fig. 16

204

201

21

Fig. 17

Fig.18

Fig. 19

Fig. 20

$$C_{ij}$$

$$, i=1, 2, \ldots 8; j=1, 2, \ldots 8$$

Determining $\tilde{C}_{ij}$

$$C_{min}$$

$$C_{max}$$

$$\tilde{\epsilon}_{LBP} = \tilde{S}^T \, \tilde{C}$$

$$\tilde{S}_{ij}$$

Display

Image

Fig. 21

Fig. 22

Fig. 23

Fig. 24

Fig. 25

Fig. 26

304

Fig. 27

304

Fig. 28

Fig. 29

320

Fig. 29A

307

305

302

303

302

305

Fig. 30

411  408  410  401  409

404

402  407  4  414

403

Fig. 31

4  14  402  404  407

Fig. 32

4

407

Fig. 33

Europäisches
Patentamt

European
Patent Office

Office européen
des brevets

## EUROPEAN SEARCH REPORT

Application Number

EP 09 17 4669

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/166035 A1 (ALMAGUER JAMES S [US]) 2 July 2009 (2009-07-02) | 1-3 | INV. E21B47/022 E21B47/09 E21B47/10 G01V11/00 G01N27/22 |
| Y | * paragraphs [0065], [0068], [0071], [0072], [0075] - [0077], [0084] * | 4-7 | |
| Y | US 4 808 925 A (BAIRD GARY K [US]) 28 February 1989 (1989-02-28) * column 4, line 41 - column 5, line 7 * | 4 | |
| Y | US 4 975 645 A (LUCAS GARY [GB]) 4 December 1990 (1990-12-04) * column 2, lines 18-43 * * column 4, line 60 - column 5, line 37 * | 5-7 | |
| A | US 2003/020493 A1 (HAASE MARK CHRISTOPHER [NL] ET AL) 30 January 2003 (2003-01-30) * abstract * | 1-7 | |
| A | US 5 251 479 A (SIEGFRIED II ROBERT W [US] ET AL) 12 October 1993 (1993-10-12) * column 4, line 48 - column 5, line 32 * | 1-7 | |
| A | WO 92/13174 A1 (CHARDEC CONSULTANTS LTD [GB]) 6 August 1992 (1992-08-06) * page 7, paragraph 3 - page 8, paragraph 1 * | 1-7 | TECHNICAL FIELDS SEARCHED (IPC)  E21B G01V G01N |
| A | US 2008/164025 A1 (PETER ANDREAS [DE]) 10 July 2008 (2008-07-10) * paragraph [0020] * | 1-7 | |

The present search report has been drawn up for all claims

| Place of search | Date of completion of the search | Examiner |
|---|---|---|
| The Hague | 29 March 2010 | Garrido Garcia, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 09 17 4669

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-7

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 09 17 4669

The Search Division considers that the present European patent application does not comply with the requirements of unity of invention and relates to several inventions or groups of inventions, namely:

```
1. claims: 1-7

        Logging tool with electrodes for capacitance measurements
                            ---

2. claims: 8-12

                    Scanning tool for borehole imaging
                            ---

3. claims: 13-15

        Ranging system for continuously detecting the distance
        between a first and a second borehole
                            ---
```

## ANNEX TO THE EUROPEAN SEARCH REPORT
## ON EUROPEAN PATENT APPLICATION NO.

EP 09 17 4669

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2010

| Patent document cited in search report | | | Publication date | Patent family member(s) | | | Publication date |
|---|---|---|---|---|---|---|---|
| US 2009166035 | A1 | | 02-07-2009 | AU<br>WO | 2008343464<br>2009085615 | A1<br>A2 | 09-07-2009<br>09-07-2009 |
| US 4808925 | A | | 28-02-1989 | NONE | | | |
| US 4975645 | A | | 04-12-1990 | CA<br>DE<br>EP<br>GB<br>NO | 2002584<br>68920010<br>0372598<br>2227841<br>894817 | A1<br>D1<br>A2<br>A<br>A | 03-06-1990<br>26-01-1995<br>13-06-1990<br>08-08-1990<br>05-06-1990 |
| US 2003020493 | A1 | | 30-01-2003 | AU<br>AU<br>BR<br>CA<br>WO<br>MX<br>NO<br>OA | 4067601<br>2001240676<br>0108926<br>2401849<br>0165212<br>PA02008639<br>20024144<br>12143 | A<br>B2<br>A<br>A1<br>A1<br>A<br>A<br>A | 12-09-2001<br>28-10-2004<br>29-04-2003<br>07-09-2001<br>07-09-2001<br>14-04-2003<br>17-10-2002<br>05-05-2006 |
| US 5251479 | A | | 12-10-1993 | NONE | | | |
| WO 9213174 | A1 | | 06-08-1992 | AU<br>GB | 1171592<br>2252169 | A<br>A | 27-08-1992<br>29-07-1992 |
| US 2008164025 | A1 | | 10-07-2008 | GB<br>WO | 2458613<br>2008086464 | A<br>A2 | 30-09-2009<br>17-07-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6768299 B